# EUROPEAN PATENT APPLICATION

(11) **EP 4 750 109 A1**
(43) Date of publication of application: **27.05.2026**
(21) Application number: 24850805.3
(22) Date of filing: 25.07.2024
(51) Int. Cl.: H04W 12/02

(54) **COMMUNICATION METHOD AND COMMUNICATION APPARATUS**

(30) Priority: 04.08.2023 CN 202310980095
(71) Applicant: HUAWEI TECHNOLOGIES CO., LTD., Shenzhen, Guangdong 518129 (CN)
(72) Inventor: GUO, Longhua, Shenzhen, Guangdong 518129 (CN); WU, Rong, Shenzhen, Guangdong 518129 (CN)
(74) Representative: Maiwald GmbH
(86) International application number: PCT/CN2024/107462
(87) International publication number: WO 2025/031156

(57) **Abstract**

A communication method is provided, including: When an access network device determines to perform confidentiality and integrity security protection of a user plane by using a security algorithm, the access network device configures the security algorithm of the user plane and a security key applicable to the security algorithm. In addition, the access network device notifies, by using first indication information, a terminal device to enable integrity security protection and confidentiality security protection of the user plane. The security algorithm of the user plane and the security key applicable to the security algorithm are configured, so that security protection can be performed on the user plane based on the security algorithm that can implement both confidentiality security protection and integrity security protection, thereby avoiding a security risk existing in performing security protection on the user plane based on a combination of a confidentiality security protection algorithm and an integrity security protection algorithm.

## Description

This application claims priority to Chinese Patent Application No. 202310980095.7, filed with the China National Intellectual Property Administration on August 4, 2023 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

When an access network device starts an access stratum (access stratum, AS) security mode control procedure (security mode control procedure), after a network side sends an AS security mode command (security mode command, SMC) message to a terminal side, a terminal device responds to the AS SMC message and returns an AS security mode complete (security mode complete, SMP) message to the network side.

Specifically, the terminal device and the access network device may negotiate a security protection algorithm based on an AS SMC procedure, to protect a message transmitted between the terminal device and the network side, and may perform user plane security protection activation by using a radio resource control (radio resource control, RRC) connection reconfiguration procedure. In the current AS SMC procedure, a confidentiality security protection algorithm and an integrity security protection algorithm may be negotiated. However, when confidentiality security protection and integrity security protection need to be performed, a security risk exists in a combination of the confidentiality security protection algorithm and the integrity security protection algorithm.

### SUMMARY

This application provides a communication method, to improve security of user plane message transmission.

According to a first aspect, a communication method is provided. The method may be performed by an access network device, or may be performed by a component (for example, a chip or a circuit) of the access network device. This is not limited in this application.

The communication method includes: when determining to perform confidentiality and integrity security protection of a user plane by using a security algorithm, configuring the security algorithm of the user plane and a security key applicable to the security algorithm; and sending first indication information to a terminal device, where the first indication information indicates to activate confidentiality and integrity security protection of the user plane, where the security algorithm includes a part for confidentiality protection and a part for integrity protection, the security algorithm is used for confidentiality and integrity security protection of the user plane, and performing confidentiality and integrity security protection of the user plane includes: performing integrity protection on a user plane message by using the security key as an input key of the part for integrity protection in the security algorithm, and performing confidentiality protection on the user plane message by using the security key as an input key of the part for confidentiality protection in the security algorithm. In this application, performing security protection of the user plane may be understood as performing security protection on the user plane message, for example, performing confidentiality and integrity security protection on a message transmitted on the user plane.

Based on the foregoing solution, when the access network device determines to perform security protection on the user plane by using the security algorithm that can implement both confidentiality security protection and integrity security protection, the access network device configures the security algorithm of the user plane and the security key applicable to the security algorithm, so that the access network device can perform integrity security protection and confidentiality security protection on the user plane message based on a same security key, thereby avoiding a security risk existing in a combination of a confidentiality security protection algorithm and an integrity security protection algorithm, and improving security of user plane message transmission.

For example, when integrity security protection and confidentiality security protection are required for the user plane message, security protection does not need to be performed based on the integrity security protection algorithm and the confidentiality security protection algorithm, to avoid the security risk existing in the combination of the confidentiality security protection algorithm and the integrity security protection algorithm. Performing security protection on the user plane message by using the confidentiality security protection algorithm and the integrity security protection algorithm specifically includes: first performing integrity security protection on the user plane message based on the integrity security protection algorithm, and then performing confidentiality security protection on the user plane message by using an integrity security protection result as an input parameter of the confidentiality security protection algorithm. However, the used confidentiality security protection algorithm and the used integrity security protection algorithm are independent. When the integrity security protection result is used as the input parameter of confidentiality security protection, algorithm splicing may exist, which poses a security risk.

With reference to the first aspect, in some implementations of the first aspect, the method further includes: determining, based on at least one of the following information, to perform confidentiality and integrity security protection of the user plane by using the security algorithm: capability information of the terminal device, a security protection policy for a user plane message, an algorithm negotiation result, or an algorithm selection policy.

Based on the foregoing solution, the access network device may determine, based on different information, whether to perform security protection on the user plane by using the security algorithm. For example, considering the capability information of the terminal device, the access network device selects to perform security protection on the user plane by using the security algorithm, to avoid a security protection failure caused by selection of an inappropriate security algorithm in a subsequent user plane message transmission process. For another example, considering the security protection policy for a user plane, the access network device selects to perform security protection on the user plane by using the security algorithm, to select an algorithm that meets the security protection policy for user plane message transmission. For still another example, considering the algorithm negotiation result, the access network device selects, based on the algorithm negotiation result, to perform security protection on the user plane by using the security algorithm, to directly select the security algorithm based on the algorithm negotiation result, thereby avoiding performing algorithm negotiation again, and reducing solution complexity.

With reference to the first aspect, in some implementations of the first aspect, the method further includes: sending second indication information to the terminal device, where the second indication information indicates to perform confidentiality and integrity security protection of the user plane based on the security algorithm.

Based on the foregoing solution, the access network device may notify, by using the second indication information, the terminal device that security protection needs to be performed on the subsequently transmitted user plane message based on the security algorithm, so that the terminal device can determine a security protection mode of the user plane message based on the second indication information, and the terminal device can determine the security protection mode of the user plane message without performing complex determining, thereby reducing implementation complexity of the terminal device.

With reference to the first aspect, in some implementations of the first aspect, the method further includes: sending, to the terminal device, a data radio bearer DRB identifier, a session identifier, or a distributed unit DU identifier corresponding to the second indication information.

Based on the foregoing solution, the access network device may send, to the terminal device, the DRB identifier, the session identifier, or the distributed unit DU identifier corresponding to the second indication information, to indicate that a granularity of subsequent user plane security protection may be configuring a security protection algorithm and a security key for a DRB, or configuring a security protection algorithm and a security key for a session, or configuring a security protection algorithm and a security key for a DU, or the like. In other words, user plane security protection may be at different granularities, thereby improving flexibility of the solution.

With reference to the first aspect, in some implementations of the first aspect, sending the second indication information to the terminal device includes: when determining to perform confidentiality and integrity security protection of the user plane by using the security algorithm, sending the second indication information to the terminal device.

With reference to the first aspect, in some implementations of the first aspect, before sending the first indication information to the terminal device, the method further includes: selecting the security algorithm for confidentiality and integrity security protection of the user plane; and sending an identifier of the security algorithm to the terminal device in an access stratum security mode command AS SMC procedure.

With reference to the first aspect, in some implementations of the first aspect, sending the first indication information to the terminal device includes: sending a radio resource control RRC connection reconfiguration message to the terminal device, where the RRC connection reconfiguration message includes the first indication information.

With reference to the first aspect, in some implementations of the first aspect, the RRC connection reconfiguration message further includes the identifier of the security algorithm.

Based on the foregoing solution, the access network device may add the identifier of the security algorithm to the RRC connection reconfiguration message sent to the terminal device, or may have negotiated the security algorithm used for user plane message security protection with the terminal device before sending the first indication information. In this technical solution, an occasion at which the access network device and the terminal device negotiate the used algorithm is not limited, thereby improving flexibility of the solution.

With reference to the first aspect, in some implementations of the first aspect, the first indication information is status information of activating integrity security protection and activating confidentiality security protection, or the first indication information is the identifier of the security algorithm.

With reference to the first aspect, in some implementations of the first aspect, configuring the security algorithm of the user plane and the security key applicable to the security algorithm includes: configuring, on a packet data convergence protocol (Packet Data Convergence Protocol, PDCP) entity, the security algorithm of the user plane and the security key applicable to the security algorithm.

With reference to the first aspect, in some implementations of the first aspect, the method further includes: receiving an uplink user plane message from the terminal device, performing integrity verification on the uplink user plane message by using the security key as the input key of the part for integrity protection in the security algorithm, and decrypting the uplink user plane message by using the security key as the input key of the part for confidentiality protection in the security algorithm.

Based on the foregoing solution, the access network device may perform confidentiality security protection and integrity security protection (for example, integrity check and decryption) on the uplink user plane message based on a same security key, to avoid a security risk existing in a combination of a confidentiality security protection algorithm and an integrity security protection algorithm.

According to a second aspect, a communication method is provided. The method may be performed by a terminal device, or may be performed by a component (for example, a chip or a circuit) of the terminal device. This is not limited in this application.

The communication method includes: receiving first indication information, where the first indication information indicates to activate confidentiality and integrity security protection of a user plane; and determining, based on the first indication information, to perform confidentiality and integrity security protection of the user plane by using a security algorithm, and configuring the security algorithm of the user plane and a security key applicable to the security algorithm, where the security algorithm includes a part for confidentiality protection and a part for integrity protection, the security algorithm is used for confidentiality and integrity security protection of the user plane, and performing confidentiality and integrity security protection of the user plane includes: performing integrity protection on a user plane message by using the security key as an input key of the part for integrity protection in the security algorithm, and performing confidentiality protection on the user plane message by using the security key as an input key of the part for confidentiality protection in the security algorithm.

With reference to the second aspect, in some implementations of the second aspect, the method further includes: receiving second indication information, where the second indication information indicates to perform confidentiality and integrity security protection of the user plane based on the security algorithm.

With reference to the second aspect, in some implementations of the second aspect, before receiving the first indication information, the method further includes: receiving an identifier of the security algorithm.

With reference to the second aspect, in some implementations of the second aspect, receiving the first indication information includes: receiving a radio resource control RRC connection reconfiguration message in an access stratum security mode command AS SMC procedure, where the RRC connection reconfiguration message includes the first indication information.

With reference to the second aspect, in some implementations of the second aspect, the RRC connection reconfiguration message further includes the identifier of the security algorithm.

With reference to the second aspect, in some implementations of the second aspect, the first indication information is status information of activating integrity security protection and activating confidentiality security protection, or the first indication information is the identifier of the security algorithm.

With reference to the second aspect, in some implementations of the second aspect, configuring the security algorithm of the user plane and the security key applicable to the security algorithm includes: configuring, on a packet data convergence protocol PDCP entity, the security algorithm of the user plane and the security key applicable to the security algorithm.

With reference to the second aspect, in some implementations of the second aspect, the method further includes: receiving a downlink user plane message from a network end device, performing integrity verification on the downlink user plane message by using the security key as the input key of the part for integrity protection in the security algorithm, and decrypting the downlink user plane message by using the security key as the input key of the part for confidentiality protection in the security algorithm.

For technical effects of the method shown in the second aspect and the possible designs of the second aspect, refer to the technical effects in the first aspect and the possible designs of the first aspect.

According to a third aspect, a communication apparatus is provided, configured to implement the method shown in the first aspect. The apparatus includes a transceiver unit and a processing unit. The transceiver unit is configured to receive and send information, and the processing unit is configured to perform an internal processing action.

According to a fourth aspect, a communication apparatus is provided, configured to implement the method shown in the second aspect. The apparatus includes a transceiver unit and a processing unit. The transceiver unit is configured to receive and send information, and the processing unit is configured to perform an internal processing action.

According to a fifth aspect, a communication method is provided. The method may be performed by an access network device, or may be performed by a component (for example, a chip or a circuit) of the access network device. This is not limited in this application.

The communication method includes:
determining an integrity security protection algorithm based on a selected security algorithm; when determining, based on a security protection policy, to activate integrity security protection of a user plane, configuring the integrity security protection algorithm of the user plane and a security key applicable to the integrity security protection algorithm; and sending third indication information to a terminal device, where the third indication information indicates to activate integrity security protection of the user plane; or
determining a confidentiality security protection algorithm based on a selected security algorithm; when determining, based on a security protection policy, to activate confidentiality security protection of a user plane, configuring the confidentiality security protection algorithm of the user plane and a security key applicable to the confidentiality security protection algorithm; and sending third indication information to a terminal device, where the third indication information indicates to activate confidentiality security protection of the user plane, where
the security algorithm includes a part for confidentiality protection and a part for integrity protection, the security algorithm is used for confidentiality and integrity security protection, and performing confidentiality and integrity security protection includes: performing integrity protection by using the security key as an input key of the part for integrity protection in the security algorithm, and performing confidentiality protection by using the security key as an input key of the part for confidentiality protection in the security algorithm.

Based on the foregoing solution, the access network device determines, based on the security protection policy, to activate integrity security protection or confidentiality security protection of the user plane. When a negotiation result in an algorithm negotiation process is the security algorithm, the access network device may still determine the required integrity security protection algorithm or confidentiality security protection algorithm based on the security algorithm, so that user plane security protection can still be implemented when the algorithm negotiation result does not match the security protection policy.

With reference to the fifth aspect, in some implementations of the fifth aspect, sending the third indication information to the terminal device includes: sending a radio resource control RRC connection reconfiguration message to the terminal device, where the RRC connection reconfiguration message includes the third indication information.

With reference to the fifth aspect, in some implementations of the fifth aspect, the RRC connection reconfiguration message further includes an identifier of the security algorithm; or before sending the third indication information to the terminal device, the method further includes: selecting the security algorithm for confidentiality and integrity security protection of the user plane; and sending an identifier of the security algorithm to the terminal device in an access stratum security mode command AS SMC procedure.

Based on the foregoing solution, the access network device may add the identifier of the security algorithm to the RRC connection reconfiguration message sent to the terminal device, or may have negotiated the security algorithm used for user plane security protection with the terminal device in the AS SMC procedure before sending the third indication information. In this technical solution, an occasion at which the access network device and the terminal device negotiate the used algorithm is not limited, thereby improving flexibility of the solution.

With reference to the fifth aspect, in some implementations of the fifth aspect, the third indication information is status information of activating integrity security protection or activating confidentiality security protection.

According to a sixth aspect, a communication method is provided. The method may be performed by a terminal device, or may be performed by a component (for example, a chip or a circuit) of the terminal device. This is not limited in this application.

The communication method includes: determining an integrity security protection algorithm based on a selected security algorithm; receiving third indication information, where the third indication information indicates to activate integrity security protection of a user plane; and when determining, based on the third indication information, to perform integrity security protection of the user plane by using the integrity security protection algorithm, configuring the integrity security protection algorithm of the user plane and a security key applicable to the integrity security protection algorithm; or
determining a confidentiality security protection algorithm based on a selected security algorithm; receiving third indication information, where the third indication information indicates to activate confidentiality security protection of a user plane; and when determining, based on the third indication information, to perform confidentiality security protection of the user plane by using the confidentiality security protection algorithm, configuring the confidentiality security protection algorithm of the user plane and a security key applicable to the confidentiality security protection algorithm, where
the security algorithm includes a part for confidentiality protection and a part for integrity protection, the security algorithm is used for confidentiality and integrity security protection of the user plane, and performing confidentiality and integrity security protection includes: performing integrity protection by using the security key as an input key of the part for integrity protection in the security algorithm, and performing confidentiality protection by using the security key as an input key of the part for confidentiality protection in the security algorithm.

With reference to the sixth aspect, in some implementations of the sixth aspect, receiving the third indication information includes: receiving a radio resource control RRC connection reconfiguration message, where the RRC connection reconfiguration message includes the third indication information.

With reference to the sixth aspect, in some implementations of the sixth aspect, the RRC connection reconfiguration message further includes an identifier of the security algorithm; or before sending the third indication information to the terminal device, the method further includes: receiving an identifier of the security algorithm from an access network device in an access stratum security mode command AS SMC procedure.

With reference to the sixth aspect, in some implementations of the sixth aspect, the RRC connection reconfiguration message further includes the identifier of the security algorithm.

With reference to the sixth aspect, in some implementations of the sixth aspect, the third indication information is status information of activating integrity security protection or activating confidentiality security protection.

For technical effects of the method shown in the sixth aspect and the possible designs of the sixth aspect, refer to the technical effects in the fifth aspect and the possible designs of the fifth aspect.

According to a seventh aspect, a communication apparatus is provided, to implement the method shown in the fifth aspect. The apparatus includes a transceiver unit and a processing unit. The transceiver unit is configured to receive and send information, and the processing unit is configured to perform an internal processing action.

According to an eighth aspect, a communication apparatus is provided, configured to implement the method shown in the sixth aspect. The apparatus includes a transceiver unit and a processing unit. The transceiver unit is configured to receive and send information, and the processing unit is configured to perform an internal processing action.

According to a ninth aspect, a communication system is provided, including an access network device and a terminal device. The access network device is configured to perform the method shown in the first aspect, and the terminal device performs the method shown in the second aspect; or the access network device is configured to perform the method shown in the fifth aspect, and the terminal device performs the method shown in the sixth aspect.

According to a tenth aspect, a communication apparatus is provided. The apparatus includes: a memory, configured to store a program; and a processor, configured to execute the program stored in the memory. When the program stored in the memory is executed, the processor is configured to perform the methods provided in the foregoing aspects.

According to an eleventh aspect, this application provides a processor, configured to perform the methods provided in the foregoing aspects. In a process of performing these methods, a process of sending the foregoing information and a process of obtaining/receiving the foregoing information in the foregoing methods may be understood as a process of outputting the foregoing information by the processor and a process of receiving the foregoing input information by the processor. When outputting the information, the processor outputs the information to a transceiver, so that the transceiver transmits the information. After the information is output by the processor, other processing may further need to be performed on the information before the information arrives at the transceiver. Similarly, when the processor receives the input information, the transceiver obtains/receives the information, and inputs the information into the processor. Further, after the transceiver receives the information, other processing may need to be performed on the information before the information is input into the processor.

According to the foregoing principle, for example, receiving a request message as mentioned in the foregoing methods may be understood as receiving input information by the processor.

Unless otherwise specified, or if operations such as transmitting, sending, and obtaining/receiving related to the processor do not contradict an actual function or internal logic of the operations in related descriptions, all the operations may be more generally understood as operations such as outputting, receiving, and inputting of the processor, instead of operations of transmitting, sending, and receiving directly performed by a radio frequency circuit and an antenna.

In an implementation process, the processor may be a processor specially configured to perform these methods, or may be a processor that executes computer instructions in the memory to perform these methods, for example, a general-purpose processor. The memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in embodiments of this application.

According to a twelfth aspect, a computer-readable storage medium is provided. The computer-readable medium stores program code executed by a device, and the program code includes the methods provided in the foregoing aspects.

According to a thirteenth aspect, a computer program product including instructions is provided. When the computer program product runs on a computer, the computer is enabled to perform the methods provided in the foregoing aspects.

According to a fourteenth aspect, a chip is provided. The chip includes a processor and a communication interface, and the processor reads, through the communication interface, instructions stored in a memory, to perform the methods provided in the foregoing aspects.

Optionally, in an implementation, the chip may further include a memory. The memory stores instructions. The processor is configured to execute the instructions stored in the memory, and when the instructions are executed, the processor is configured to perform the methods provided in the foregoing aspects.

### BRIEF DESCRIPTION OF DRAWINGS

FIG. 1 is a diagram of a network architecture 100;
(a) and (b) in FIG. 2 are diagrams of a manner of using an authenticated encryption algorithm;
FIG. 3 is a schematic flowchart of an AS SMC procedure;
FIG. 4 is a schematic flowchart of a security activation procedure of a UP message;
FIG. 5 is a schematic flowchart of a communication method according to this application;
FIG. 6 is a schematic flowchart of another communication method according to this application;
FIG. 7 is a schematic flowchart of still another communication method according to this application;
FIG. 8 is a block diagram of a communication apparatus 10 according to an embodiment of this application;
FIG. 9 is a diagram of another communication apparatus 20 according to an embodiment of this application; and
FIG. 10 is a diagram of a chip system 30 according to an embodiment of this application.

### DESCRIPTION OF EMBODIMENTS

The following describes technical solutions of this application with reference to accompanying drawings.

The technical solutions provided in this application may be applied to various communication systems, for example, a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

In a communication system, a part operated by an operator may be referred to as a public land mobile network (public land mobile network, PLMN), which may also be referred to as an operator network or the like. The PLMN is a network established and operated by a government or an operator approved by the government to provide a land mobile communication service for the public, and is mainly a public network in which a mobile network operator (mobile network operator, MNO) provides a mobile broadband access service for a user. The PLMN described in embodiments of this application may be specifically a network that meets a 3GPP standard requirement, which is briefly referred to as a 3GPP network. The 3GPP network usually includes but is not limited to a 5G network, a 4th generation (4th-generation, 4G) mobile communication network, and another future communication system such as a 6th generation (6th-generation, 6G) network. The technical solutions are also applicable to an SNPN (Stand-alone Non-Public Network).

For ease of description, the PLMN or the 5G network is used as an example for description in embodiments of this application.

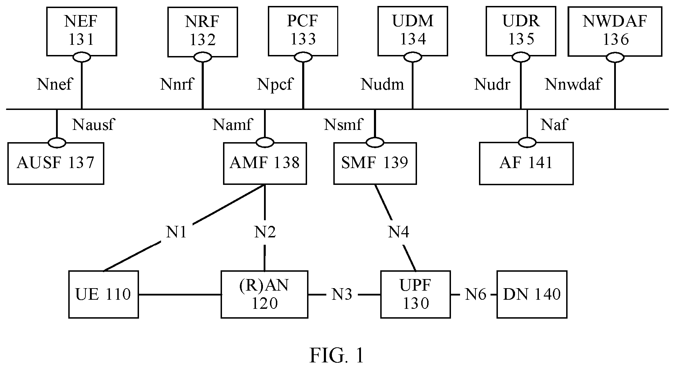

FIG. 1 is a diagram of a network architecture 100. A 5G network architecture based on a service-based architecture in a non-roaming scenario defined in a 3GPP standardization process is used as an example. As shown in the figure, the network architecture may include three parts: a terminal device part, a DN part, and an operator network PLMN part. The following briefly describes a function of a network element of each part.

The terminal device part may include a terminal device 110, and the terminal device 110 may also be referred to as user equipment (user equipment, UE). The terminal device 110 in this application is a device having a wireless transceiver function, and may communicate with one or more core network (core network, CN) devices through an access network device (which may also be referred to as an access device) in a radio access network (radio access network, RAN) 140. The terminal device 110 may also be referred to as an access terminal, a terminal, a subscriber unit, a subscriber station, a mobile station, a remote station, a remote terminal, a mobile device, a user terminal, a user agent, a user apparatus, or the like. The terminal device 110 may be deployed on land, including an indoor, outdoor, handheld, or vehicle-mounted device; may be deployed on the water (for example, a ship); or may be deployed in the air (for example, on an aircraft, a balloon, or a satellite). The terminal device 110 may be a cellular phone (cellular phone), a cordless telephone set, a session initiation protocol (session initiation protocol, SIP) phone, a smartphone (smartphone), a mobile phone (mobile phone), a wireless local loop (wireless local loop, WLL) station, a personal digital assistant (personal digital assistant, PDA), or the like. Alternatively, the terminal device 110 may be a handheld device having a wireless communication function, a computing device, another device connected to a wireless modem, a vehicle-mounted device, a wearable device, an uncrewed aerial vehicle device, a terminal in the internet of things or internet of vehicles, a terminal in any form in a 5G network or a future network, relay user equipment, a terminal in a future evolved 6G network, or the like. The relay user equipment may be, for example, a 5G residential gateway (residential gateway, RG). For example, the terminal device 110 may be a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (remote medical), a wireless terminal in smart grid (smart grid), a wireless terminal in transportation safety (transportation safety), a wireless terminal in smart city (smart city), or a wireless terminal in smart home (smart home). The terminal device herein is a 3GPP terminal. A type, a category, or the like of the terminal device is not limited in embodiments of this application. For ease of description, in this application, an example in which the UE represents the terminal device is used for description below.

The operator network PLMN part may include but is not limited to a (radio) access network ((radio) access network, (R)AN) 120 and a core network (core network, CN) part.

The (R)AN 120 may be considered as a sub-network of an operator network, and is an implementation system between a service node in the operator network and the terminal device 110. To access the operator network, the terminal device 110 first passes through the (R)AN 120, and then may be connected to the service node in the operator network through the (R)AN 120. The access network device (RAN device) in embodiments of this application is a device that provides a wireless communication function for the terminal device 110, and may also be referred to as a network device. The RAN device includes but is not limited to a next generation NodeB (next generation NodeB, gNB) in a 5G system, an evolved NodeB (evolved NodeB, eNB) in long term evolution (long term evolution, LTE), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a transmission reception point (transmission reception point, TRP), a transmission point (transmission point, TP), a small cell device (pico), a mobile switching center, a network device in a future network, or the like. In systems using different radio access technologies, devices with functions of the access network device may have different names. For ease of description, in all embodiments of this application, the foregoing apparatuses that provide the wireless communication function for the terminal device 110 are collectively referred to as an access network device, which is also referred to as a RAN or an AN for short. It should be understood that a specific type of the access network device is not limited in this specification.

The CN part may include but is not limited to the following NFs: a user plane function (user plane function, UPF) 130, a network exposure function (network exposure function, NEF) 131, a network function repository function (network function repository function, NRF) 132, a policy control function (policy control function, PCF) 133, a unified data management (unified data management, UDM) function 134, a unified data repository (unified data repository, UDR) function 135, a network data analytics function (network data analytics function, NWDAF) 136, an authentication server function (authentication server function, AUSF) 137, an access and mobility management function (access and mobility management function, AMF) 138, and a session management function (session management function, SMF) 139.

The data network DN 140 may also be referred to as a packet data network (packet data network, PDN), and is usually a network located outside the operator network, for example, a third-party network. Certainly, in some implementations, the DN may alternatively be deployed by an operator, that is, the DN is a part of the PLMN. Whether the DN belongs to the PLMN is not limited in this application. The operator network PLMN may access a plurality of data networks DNs 140. The data network DN 140 may be deployed with a plurality of services, and may provide a data service, a voice service, and/or the like for the terminal device 110. For example, the data network DN 140 may be a private network of a smart factory, a sensor installed in a workshop of the smart factory may be the terminal device 110, a control server of the sensor is deployed in the data network DN 140, and the control server may provide a service for the sensor. The sensor may communicate with the control server, to obtain an instruction of the control server, transmit collected sensor data to the control server according to the instruction, and the like. For another example, the data network DN 140 may be an internal office network of a company, a mobile phone or a computer of an employee of the company may be the terminal device 110, and the mobile phone or the computer of the employee may access information and data resources in the internal office network of the company. The terminal device 110 may establish a connection to the operator network through an interface (for example, N1) provided by the operator network, and use a service such as data and/or voice provided by the operator network. The terminal device 110 may further access the data network DN 140 through the operator network, and use an operator service deployed in the data network DN 140 and/or a service provided by a third party.

The following further briefly describes the NF functions included in the CN.
1. The UPF 130 is a gateway provided by the operator, and is a gateway for communication between the operator network and the data network DN 140. The UPF 130 includes user plane-related functions such as data packet routing and transmission, data packet detection, traffic usage reporting, quality of service (quality of service, QoS) handling, lawful interception, uplink data packet detection, and downlink data packet storage.
2. The NEF 131 is a control plane function provided by the operator, and is mainly used to enable a third party to use a service provided by a network, support the network in opening a capability, an event, and data analysis of the network, convert security configuration information from an external application to a PLMN and exchange information inside and outside the PLMN, provide an API interface opened by the operator network, provide interaction between an external server and an internal operator network, and the like.
3. The NRF 132 is a control plane function provided by the operator, and may be configured to maintain real-time information of a network function and a service in a network. For example, the NRF 132 supports network service discovery, maintains services supported by NF configuration data (an NF profile) of NF instances, supports discovery of a service communication proxy (service communication proxy, SCP), maintains SCP configuration data (an SCP profile) of SCP instances, sends notifications about newly registered, deregistered, and updated NFs and SCPs, maintains health statuses of NFs and SCPs, and the like.
4. The PCF 133 is a control plane function provided by the operator, and supports a unified policy framework to govern network behavior and provide subscription information related to a policy rule and a policy decision for another control function.
5. The UDM 134 is a control plane function provided by the operator, and is responsible for storage of a subscription permanent identifier (subscriber permanent identifier, SUPI) of a subscriber of the operator network, a generic public subscription identifier (generic public subscription identifier, GPSI) of the subscriber, a credential (credential), and other information. In a transmission process, confidentiality protection is first performed on the SUPI, and an SUPI obtained through the confidentiality protection is referred to as a subscription concealed identifier (subscription concealed identifier, SUCI). The information stored in the UDM 134 may be used for authentication and authorization for the terminal device 110 to access the operator network. The subscriber of the operator network may be specifically a user using a service provided by the operator network, for example, a user using a subscriber identity module (subscriber identity module, SIM) card of China Telecom or a user using a subscriber identity module card of China Mobile. The credential of the subscriber may be a long-term key stored in the subscriber identity module card, or a stored small file, for example, information related to encryption of the subscriber identity module card, and is used for authentication and/or authorization. It should be noted that, for ease of description, information such as the permanent identifier, the credential, a security context, authentication data (cookie), and a token related to verification/authentication and authorization is not limited or distinguished in embodiments of this application.
6. The UDR 135 is a control plane function provided by the operator, and provides a function of storing and obtaining subscription data for the UDM, provides a function of storing and obtaining policy data for the PCF, stores and obtains NF group ID (group ID) information of a user, and the like.
7. The NWDAF 136 is a control plane function provided by the operator, and main functions of the NWDAF 136 are to collect data from an NF, an external application function AF, an operations, administration and maintenance (operations, administration and maintenance, OAM) system, and the like, and provide the NF and the AF with NWDAF service registration, data exposure, data analysis, and the like. In this application, the NWDAF is mainly responsible for security-related data analysis. Therefore, in this application, the NWDAF may also be understood as a network element having a security analysis function. For example, the network element having a security analysis function is referred to as the NWDAF, and may have another network element name subsequently. This is not limited in this application.
8. The AUSF 137 is a control plane function provided by the operator, and is usually used for primary authentication, that is, authentication between the terminal device 110 (the subscriber) and the operator network. After receiving an authentication request initiated by the subscriber, the AUSF 137 may perform authentication and/or authorization on the subscriber by using authentication information and/or authorization information stored in the UDM 134, or generate authentication and/or authorization information of the subscriber through the UDM 134. The AUSF 137 may feed back the authentication information and/or the authorization information to the subscriber.
9. The AMF 138 is a control plane network function provided by the operator network, and is responsible for access control and mobility management when the terminal device 110 accesses the operator network, for example, including functions such as mobility status management, allocation of a temporary user identity, and user authentication and authorization.
   The AMF 138 is configured to perform a non-access stratum (non-access stratum, NAS) connection to the UE, and has a same 5G NAS security context as the UE. The 5G NAS security context includes KAMF, key identification information same as that of a NAS hierarchy key, a UE security capability, an uplink NAS COUNT value, and a downlink NAS COUNT value. The NAS hierarchy key includes a NAS confidentiality security protection key and a NAS integrity security protection key that are respectively used for confidentiality security protection and integrity security protection of a NAS message.
10. The SMF 139 is a control plane network function provided by the operator network, and is responsible for managing a PDU session of the terminal device 110. The PDU session is a channel for transmitting a PDU, and the terminal device and the data network DN 140 need to transmit PDUs to each other through the PDU session. The PDU session is established, maintained, and deleted by the SMF 139. The SMF 139 includes session-related functions such as session management (for example, session establishment, modification, and release, including tunnel maintenance between the user plane function UPF 130 and the (R)AN 120), selection and control of the UPF 130, service and session continuity (service and session continuity, SSC) mode selection, and roaming.
11. The AF 141 is a control plane network function provided by the operator network, and is configured to provide application layer information. The AF 141 may interact with a policy framework through a network exposure function network element, or directly interact with a policy framework to make a policy decision request. The AF may be located inside or outside the operator network.

It may be understood that the foregoing network elements or functions may be physical entities in a hardware device, may be software instances running on dedicated hardware, or may be virtualized functions instantiated on a sharing platform (for example, a cloud platform). In short, an NF may be implemented by hardware or software.

In FIG. 1, Nnef, Nnrf, Npcf, Nudm, Nudr, Nnwdaf, Nausf, Namf, Nsmf, N1, N2, N3, N4, and N6 are interface sequence numbers. For example, for meanings of the interface sequence numbers, refer to meanings defined in the 3GPP standard protocol. The meanings of the interface sequence numbers are not limited in this application. It should be noted that names of interfaces between the network functions in the figure are merely examples. During specific implementation, the interface names of the system architecture may alternatively be other names. This is not limited in this application. In addition, names of messages (or signaling) transmitted between the foregoing network elements are merely examples, and do not constitute any limitation on functions of the messages.

For ease of description, in embodiments of this application, network functions (such as the NEF 131, ..., and the SMF 139) are collectively/briefly referred to as an NF. In other words, an NF described below in embodiments of this application may be replaced with any network function. In addition, FIG. 1 describes only some network functions as an example, and NFs described below are not limited to the network functions shown in FIG. 1.

It should be understood that the foregoing network architecture applied to embodiments of this application is merely a network architecture described from a perspective of a service-based architecture, and a network architecture applicable to embodiments of this application is not limited thereto. Any network architecture that can implement the functions of the foregoing network elements is applicable to embodiments of this application.

It should be further understood that the AMF, the SMF, the UPF, the NEF, the AUSF, the NRF, the PCF, and the UDM shown in the figure may be understood as network elements configured to implement different functions in the core network, for example, may be combined as required to form a network slice. These network elements of the core network may be independent devices, or may be integrated into a same device to implement different functions. Specific forms of the foregoing network elements are not limited in this application.

It should be further understood that the foregoing names are defined merely for distinguishing between different functions, and should not constitute any limitation on this application. This application does not exclude a possibility that another name is used in the 5G network and another future network. For example, in the 6G network, a part or all of the foregoing network elements may still use terms in 5G, or may use other names.

For ease of understanding of embodiments of this application, some basic concepts in this application are briefly described.
1. Activating security protection based on a confidentiality security protection algorithm refers to configuring a confidentiality security protection key and a confidentiality security protection algorithm.
   Further, after security protection based on the confidentiality security protection algorithm is activated, a transmit end may perform confidentiality protection (for example, encryption) on a sent message by using the confidentiality security protection key and the confidentiality security protection algorithm; and a receive end may perform confidentiality de-protection (for example, decryption) on a received message by using the confidentiality security protection key and the confidentiality security protection algorithm.
2. Activating security protection based on an integrity security protection algorithm refers to configuring an integrity security protection key and an integrity security protection algorithm.
   Further, after security protection based on the integrity security protection algorithm is activated, a transmit end may perform integrity security protection on a sent message by using the integrity security protection key and the integrity security protection algorithm, that is, calculate MAC used for integrity security protection; and a receive end may perform integrity security protection check on a received message by using the integrity security protection key and the integrity security protection algorithm, that is, determine whether received MAC is correct.
3. Security algorithm that can implement both confidentiality security protection and integrity security protection: The security algorithm that can implement both confidentiality security protection and integrity security protection in this application may be referred to as an authenticated encryption algorithm. One type of authenticated encryption algorithm is an authenticated encryption with associated data (authenticated encryption with associated data, AEAD) algorithm. The AEAD algorithm (which may also be referred to as an AEAD mode) can implement both data confidentiality security protection and data integrity security protection. In other words, that the AEAD algorithm can implement both data confidentiality security protection and data integrity security protection may also be understood as that the AEAD algorithm can implement data confidentiality security protection and data integrity security protection when a single key (AEAD key) is used as an input key.

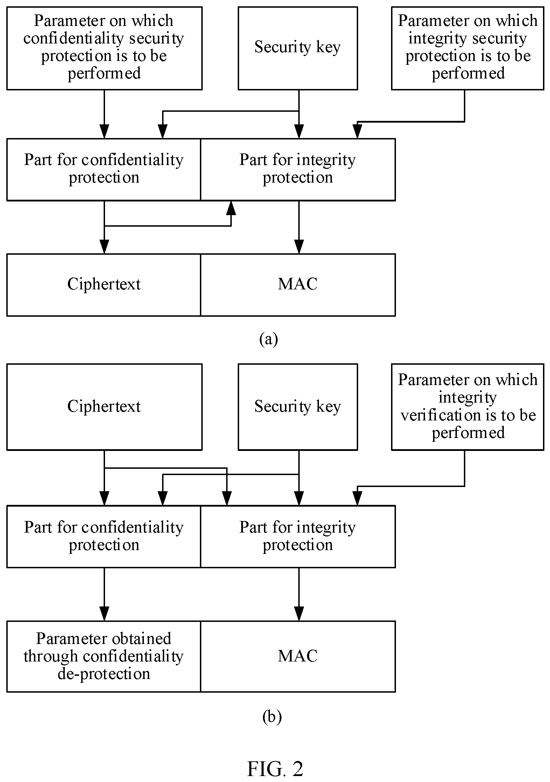

For ease of understanding, a manner of using the authenticated encryption algorithm is briefly described with reference to (a) and (b) in FIG. 2.

It can be learned from (a) and (b) in FIG. 2 that the authenticated encryption algorithm includes a part for confidentiality protection and a part for integrity protection.

It can be learned from (a) in FIG. 2 that a transmit end may perform, based on a security key and the part for confidentiality protection, confidentiality protection (for example, encryption) on a parameter on which confidentiality security protection is to be performed, to obtain ciphertext. In addition, the transmit end may perform, based on the security key, the part for integrity protection, and the ciphertext, an integrity protection operation on a parameter on which integrity security protection is to be performed, to obtain MAC. The parameter on which integrity security protection is to be performed is transferred to a receive end in a plaintext manner.

For example, the transmit end uses the parameter on which confidentiality security protection is to be performed and the security key as input of the part for confidentiality protection, and outputs the ciphertext after performing confidentiality protection; and uses the ciphertext, the security key, and the parameter on which integrity security protection is to be performed as input of the part for integrity protection, and performs the integrity protection operation to obtain the MAC. It may be understood that, after confidentiality protection is performed on the parameter on which confidentiality security protection is to be performed, the ciphertext is obtained, and integrity protection is performed on the ciphertext, that is, both confidentiality security protection and integrity security protection are performed on the parameter on which confidentiality security protection is to be performed.

It can be learned from (b) in FIG. 2 that a receive end may perform an integrity protection operation based on a security key, a parameter on which integrity verification is to be performed, received ciphertext, and the part for integrity protection, to obtain MAC. It should be understood that, in the absence of a security attack, the parameter on which integrity verification is to be performed is the foregoing parameter on which integrity security protection is to be performed. In addition, the receive end may perform confidentiality de-protection (for example, decryption) on the ciphertext based on the security key, the ciphertext, and the part for confidentiality protection, to obtain a parameter obtained through the confidentiality de-protection (for example, plaintext obtained by decrypting the ciphertext). It should be understood that, in the absence of a security attack, the parameter obtained through the confidentiality de-protection is the foregoing parameter on which confidentiality security protection is to be performed.

For example, the receive end performs the integrity protection operation by using the received parameter on which integrity verification is to be performed, the security key, and the ciphertext as input of the part for integrity protection, to obtain the MAC, and compares whether the MAC obtained by the receive end is consistent with received MAC, so as to implement integrity security protection (for example, integrity check). The receive end may further perform confidentiality de-protection (for example, decryption) by using the ciphertext and the security key as input of the part for confidentiality protection, and then output a parameter obtained through the confidentiality de-protection.

It can be learned from the foregoing that, for the transmit end, confidentiality protection is encryption; and for the receive end, integrity protection is integrity check, and confidentiality de-protection is decryption.

For example, it is assumed that the authenticated encryption algorithm shown in (a) and (b) in FIG. 2 is an AEAD algorithm.

In this case, for the transmit end, input of the AEAD algorithm includes plaintext (plaintext) (for example, the parameter on which confidentiality security protection is to be performed shown in (a) in FIG. 2), additional authentication data (additional authenticated data, AAD) (for example, the parameter on which integrity security protection is to be performed shown in (a) in FIG. 2), and an AEAD key (for example, the security key shown in (a) in FIG. 2). The plaintext part is encrypted by the AEAD key to obtain ciphertext (ciphertext) (for example, the ciphertext shown in (a) in FIG. 2), and the ciphertext is used as input of the part for integrity protection. The AAD is a part on which integrity security protection instead of confidentiality security protection is performed. Output of the AEAD algorithm includes the ciphertext part and a MAC part. The AEAD key may be used for both confidentiality security protection and integrity security protection, and therefore may also be referred to as a single key.

For the receive end, input of the AEAD algorithm includes ciphertext, AAD, and an AEAD key. The ciphertext, the AAD, and the AEAD key are used as input of the part for integrity protection, and the ciphertext and the AEAD key are used as input of the part for encryption protection.

For example, the AAD may be carried in a message as plaintext to be transferred between the transmit end and the receive end, or may be a known parameter shared by the transmit end and the receive end.

In this application, the following relationships exist between the authenticated encryption algorithm, the integrity security protection algorithm, and the confidentiality security protection algorithm:
(1) The authenticated encryption algorithm may be used to determine the corresponding integrity security protection algorithm.

In an optional manner, that the authenticated encryption algorithm is used to determine the corresponding integrity security protection algorithm includes:

An algorithm obtained by setting the part for confidentiality protection in the authenticated encryption algorithm to null may be considered as the integrity security protection algorithm. That the part for confidentiality protection is set to null may be understood as that the part for confidentiality protection is null-scheme (null-scheme). When the part for confidentiality protection is set to null, a parameter, as input of the part for confidentiality protection, on which confidentiality protection is to be performed is the same as ciphertext as output of the part for confidentiality protection, that is, confidentiality protection is not implemented on the part for confidentiality protection.

Optionally, the integrity security protection algorithm determined in this manner may also be referred to as an integrity security protection algorithm of the authenticated encryption algorithm.

In another optional manner, that the authenticated encryption algorithm is used to determine the corresponding integrity security protection algorithm includes:

The integrity security protection algorithm corresponding to the authenticated encryption algorithm is determined according to a preset rule. The preset rule may be a correspondence between the authenticated encryption algorithm and the integrity security protection algorithm. For example, the correspondence between the integrity security protection algorithm and the authenticated encryption algorithm may be: an SNOW-AEAD algorithm corresponds to an SNOW integrity security protection algorithm, a ZUC-AEAD algorithm corresponds to a ZUC integrity security protection algorithm, and an AES-AEAD algorithm corresponds to an AES integrity security protection algorithm. In this case, the SNOW integrity security protection algorithm may be determined based on the SNOW-AEAD algorithm and the correspondence, and the ZUC integrity security protection algorithm may be determined based on the ZUC-AEAD algorithm and the correspondence. Others are similar, and details are not described again. In addition, the correspondence between the integrity security protection algorithm and the authenticated encryption algorithm may also be referred to as a mapping relationship between the integrity security protection algorithm and the authenticated encryption algorithm. This is not limited in this application.

For example, a manner of obtaining the integrity security protection algorithm by setting the part for confidentiality protection in the authenticated encryption algorithm to null is referred to as mapping. This is not limited in this application. Therefore, that the authenticated encryption algorithm may be used to determine the corresponding integrity security protection algorithm may also be understood as that the authenticated encryption algorithm may be used to map the corresponding integrity security protection algorithm.

(2) The authenticated encryption algorithm may be used to determine the corresponding confidentiality security protection algorithm.

In an optional manner, that the authenticated encryption algorithm is used to determine the corresponding confidentiality security protection algorithm includes:

An algorithm obtained by setting the part for integrity protection in the authenticated encryption algorithm to null may be considered as the confidentiality security protection algorithm. That the part for integrity protection is set to null may be understood as that the part for integrity protection is null-scheme (null-scheme). When the part for integrity protection is set to null, output MAC is a constant (for example, all-zero), that is, integrity protection is not implemented on the part for integrity protection.

Optionally, the confidentiality security protection algorithm determined in this manner may also be referred to as a confidentiality security protection algorithm of the authenticated encryption algorithm.

In another optional manner, that the authenticated encryption algorithm is used to determine the corresponding confidentiality security protection algorithm includes:

The encryption algorithm corresponding to the authenticated encryption algorithm is determined according to a preset rule. The preset rule may be a correspondence between the authenticated encryption algorithm and the encryption algorithm. For example, the correspondence between the confidentiality security protection algorithm and the authenticated encryption algorithm may be: an SNOW-AEAD algorithm corresponds to an SNOW confidentiality security protection algorithm, a ZUC-AEAD algorithm corresponds to a ZUC confidentiality security protection algorithm, and an AES-AEAD algorithm corresponds to an AES confidentiality security protection algorithm. In this case, the SNOW confidentiality security protection algorithm may be determined based on the SNOW-AEAD algorithm and the correspondence, and the ZUC confidentiality security protection algorithm may be determined based on the ZUC-AEAD algorithm and the correspondence. Others are similar, and details are not described again. In addition, the correspondence between the confidentiality security protection algorithm and the authenticated encryption algorithm may also be referred to as a mapping relationship between the confidentiality security protection algorithm and the authenticated encryption algorithm. This is not limited in this application.

For example, a manner of obtaining the confidentiality security protection algorithm by setting the part for integrity protection in the authenticated encryption algorithm to null is referred to as mapping. This is not limited in this application. Therefore, that the authenticated encryption algorithm may be used to determine the corresponding confidentiality security protection algorithm may also be understood as that the authenticated encryption algorithm may be used to map the corresponding confidentiality security protection algorithm.

(3) The integrity security protection algorithm may be used to determine the corresponding authenticated encryption algorithm.

For example, that the integrity security protection algorithm is used to determine the corresponding authenticated encryption algorithm includes:

The authenticated encryption algorithm corresponding to the integrity security protection algorithm is determined according to a preset rule. The preset rule may be a correspondence between the authenticated encryption algorithm and the integrity security protection algorithm. For an example, refer to the descriptions in (1). In this case, the SNOW integrity security protection algorithm may be used to determine the SNOW-AEAD algorithm, and the ZUC integrity security protection algorithm may be used to determine the ZUC-AEAD algorithm. Others are similar, and details are not described again.

For example, the correspondence between the authenticated encryption algorithm and the integrity security protection algorithm may also be referred to as a mapping relationship between the authenticated encryption algorithm and the integrity security protection algorithm. Therefore, that the integrity security protection algorithm may be used to determine the corresponding authenticated encryption algorithm may also be understood as that the integrity security protection algorithm may be used to map the corresponding authenticated encryption algorithm.

(4) The confidentiality security protection algorithm may be used to determine the corresponding authenticated encryption algorithm.

For example, that the confidentiality security protection algorithm is used to determine the corresponding authenticated encryption algorithm includes:

The authenticated encryption algorithm corresponding to the confidentiality security protection algorithm is determined according to a preset rule. The preset rule may be a correspondence between the authenticated encryption algorithm and the encryption algorithm. For an example, refer to the descriptions in (2). In this case, the SNOW confidentiality security protection algorithm may be used to determine the SNOW-AEAD algorithm, and the ZUC confidentiality security protection algorithm may be used to determine the ZUC-AEAD algorithm. Others are similar, and details are not described again.

For example, the correspondence between the authenticated encryption algorithm and the confidentiality security protection algorithm may also be referred to as a mapping relationship between the authenticated encryption algorithm and the confidentiality security protection algorithm. Therefore, that the confidentiality security protection algorithm may be used to determine the corresponding authenticated encryption algorithm may also be understood as that the confidentiality security protection algorithm may be used to map the corresponding authenticated encryption algorithm.

### 4. AS SMC procedure:

For example, functions of the AS SMC procedure are mainly to perform radio resource control (radio resource control, RRC) and user plane (user plane, UP) algorithm negotiation and RRC security activation. An RRC reconfiguration message is mainly used for UP security activation.

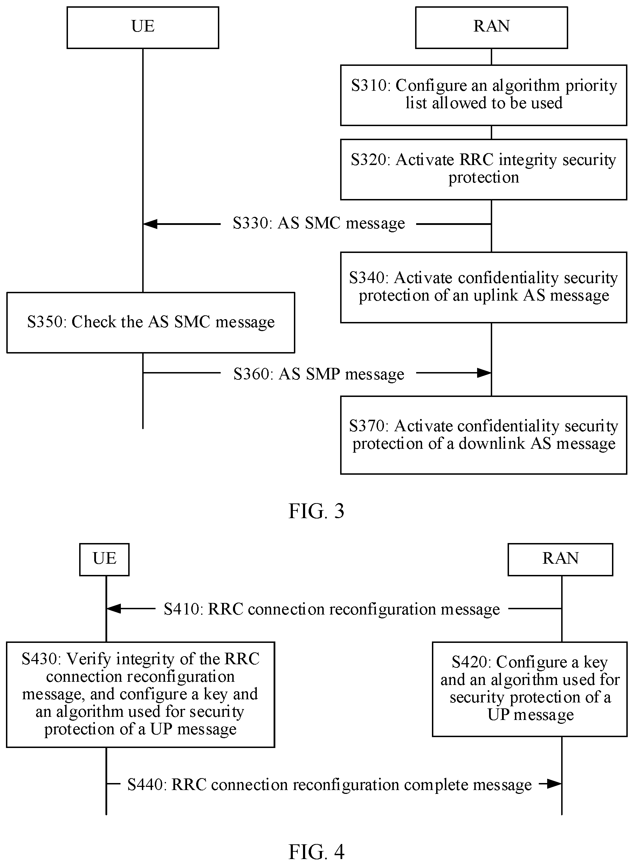

For ease of understanding, an AS SMC procedure is described in detail with reference to FIG. 3.

FIG. 3 is a schematic flowchart of an AS SMC procedure, including the following steps.

S310: An access network device configures an algorithm priority list allowed to be used.

For example, an AS integrity security protection algorithm priority list (for example, AS integrity security protection algorithms configured on the access network device include an AES integrity security protection algorithm, an SNOW integrity security protection algorithm, a ZUC integrity security protection algorithm, and a null integrity security protection algorithm, where the plurality of configured integrity security protection algorithms are respectively the AES integrity security protection algorithm, the SNOW integrity security protection algorithm, the ZUC integrity security protection algorithm, and the null integrity security protection algorithm in descending order of priorities) and an AS confidentiality security protection algorithm priority list (for example, AS confidentiality security protection algorithms configured on the access network device include a ZUC confidentiality security protection algorithm, an AES confidentiality security protection algorithm, an SNOW confidentiality security protection algorithm, and a null integrity security protection algorithm, where the plurality of configured confidentiality security protection algorithms are respectively the ZUC confidentiality security protection algorithm, the AES confidentiality security protection algorithm, the SNOW confidentiality security protection algorithm, and the null integrity security protection algorithm in descending order of priorities) are configured on the access network device.

The access network device receives a UE security capability, and selects an AS integrity security protection algorithm and an AS confidentiality security protection algorithm based on the UE security capability and the algorithm priority lists. For example, if the UE security capability includes that supported AS integrity security protection algorithms are the AES integrity security protection algorithm and the SNOW integrity security protection algorithm, the integrity security protection algorithm selected by the access network device is the AES integrity security protection algorithm. For another example, if the UE security capability includes that supported AS confidentiality security protection algorithms are the AES confidentiality security protection algorithm and the ZUC confidentiality security protection algorithm, the confidentiality security protection algorithm selected by the access network device is the ZUC confidentiality security protection algorithm.

S320: Activate RRC integrity security protection.

Specifically, before sending an AS SMC message, the access network device activates RRC integrity security protection.

Further, the access network device performs integrity security protection calculation on the AS SMC message, and obtains MAC-I. For example, an input key for calculating AS MAC is Krrcint, input parameters are a bearer identity, a direction parameter, and a value of a counter, and a used security protection algorithm is the selected integrity security protection algorithm.

The bearer identity is used to distinguish between different bearers. For example, in a 3GPP connection, the bearer identity may be "0x01", and in a non-3GPP connection, the bearer identity may be "0x02". The direction parameter is used to distinguish between an uplink message and a downlink message. For example, in the uplink message, a value of the direction parameter is 0, and in the downlink message, a value of the direction parameter is 1. The value of the counter is used as a freshness parameter to prevent a replay attack.

It should be noted that, in the AS SMC message, only integrity security protection is performed, and confidentiality security protection is not performed. This is because a UE side needs to use a parameter (such as ngKSI) in the message to obtain a key and an algorithm for integrity check.

S330: The access network device sends the AS SMC message to the UE.

The AS SMC message includes but is not limited to the selected confidentiality security protection algorithm and the selected integrity security protection algorithm. The selected confidentiality security protection algorithm and the selected integrity security protection algorithm are a part of an AS security context, and are used by the UE and the access network device side to negotiate a security protection algorithm for subsequent security protection.

It should be noted that security protection algorithms of an RRC message and a UP message may be unified, that is, the selected confidentiality security protection algorithm and the selected integrity security protection algorithm are applicable to both security protection of the RRC message and security protection of the UP message; or security protection algorithms of an RRC message and a UP message may be independent, that is, the message includes a confidentiality security protection algorithm selected for the RRC message, an integrity security protection algorithm selected for the RRC message, a confidentiality security protection algorithm selected for the UP message, and an integrity security protection algorithm selected for the UP message.

S340: The access network device activates decryption of an uplink RRC message.

Specifically, after sending the AS SMC message, the access network device activates decryption of the uplink RRC message.

S350: The UE checks the AS SMC message.

For example, the UE obtains corresponding Krrcint, and performs integrity check based on the integrity security protection algorithm carried in the message. If the integrity check succeeds, the UE activates integrity security protection and confidentiality security protection (for example, encryption) of an uplink RRC message and confidentiality security de-protection (for example, decryption) of a downlink message.

S360: The UE sends an AS SMP message to the access network device.

Specifically, when the check in step S350 succeeds, the UE sends the AS SMP message to the access network device, where the message is integrity security-protected and confidentiality security-protected. For example, an integrity security protection key is Krrcint, an integrity security protection algorithm is the selected integrity security protection algorithm carried in the AS SMC message in step S330, a confidentiality security protection key is Krrcenc, and a confidentiality security protection algorithm is the selected confidentiality security protection algorithm carried in the AS SMC message in step S330. MAC-I is used to perform integrity security protection. The access network device receives the AS SMP message, and performs decryption and integrity check on the message.

S370: The UE activates confidentiality security protection of the uplink RRC message.

After sending the AS SMP message, the UE activates confidentiality security protection of the uplink RRC message.

S380: The access network device activates confidentiality protection of the downlink RRC message.

After receiving the AS SMP message, the access network device activates confidentiality security protection of the downlink RRC message.

It should be noted that, in an existing security mechanism, confidentiality security protection and integrity security protection are independent of each other, that is, keys and algorithms are isolated.

5. Security activation of a user plane (user plane, UP) message: An RRC connection reconfiguration message is mainly used for security activation of the UP message.

For ease of understanding, a security activation procedure of a UP is described in detail with reference to FIG. 4.

FIG. 4 is a schematic flowchart of a security activation procedure of a UP, including the following steps.

S410: A RAN sends an RRC connection reconfiguration message to UE.

The RRC connection reconfiguration message includes a data radio bearer (Data Radio Bearer, DRB) identifier and an integrity security protection indication and a confidentiality security protection indication of the UP message corresponding to the DRB identifier.

It should be understood that an RRC connection reconfiguration procedure used for security activation of the UP message occurs after an AS SMC procedure, that is, after RRC security activation.

S420: The RAN configures a key and an algorithm used for security protection of the UP message.

For example, the RAN configures a packet data convergence protocol (Packet Data Convergence Protocol, PDCP) entity corresponding to the DRB identifier.

If integrity security protection of the UP is activated on a DRB indicated in the RRC connection reconfiguration message, and the RAN does not have an integrity security protection key of the UP, the RAN needs to generate the integrity security protection key of the UP. The RAN configures the integrity security protection key and an integrity security protection algorithm of the UP message on the PDCP entity. The RAN activates integrity check of an uplink user plane message on the DRB, and activates integrity security protection of a downlink user plane message on the DRB.

Similarly, if confidentiality of the UP is activated on a DRB indicated in the RRC connection reconfiguration message, and the RAN does not have a confidentiality security protection key of the UP, the RAN needs to generate the confidentiality security protection key of the UP. The RAN configures the confidentiality security protection key and a confidentiality security protection algorithm of the UP message on the PDCP entity. The RAN activates decryption of an uplink user plane message on the DRB, and activates confidentiality security protection of a downlink user plane message on the DRB.

S430: The UE verifies integrity of the RRC connection reconfiguration message.

If integrity security protection of the UP is activated on the DRB indicated in the RRC connection reconfiguration message, and the UE does not have an integrity security protection key of the UP, the UE needs to generate the integrity security protection key of the UP. The UE configures a key and an algorithm used for security protection of the UP message. For example, the UE configures the integrity security protection key and an integrity security protection algorithm of the UP message on the PDCP entity. The UE activates integrity security protection of an uplink user plane message on the DRB, and activates integrity check of a downlink user plane message on the DRB.

Similarly, if confidentiality security protection of the UP is activated on the DRB indicated in the RRC connection reconfiguration message, and the UE does not have a confidentiality security protection key of the UP, the UE needs to generate the confidentiality security protection key of the UP. The UE configures the integrity security protection key and an integrity security protection algorithm of the UP message on the PDCP entity. The UE activates confidentiality security protection of an uplink user plane message on the DRB, and activates decryption of a downlink user plane message on the DRB.

S440: The UE sends an RRC connection reconfiguration complete message to the RAN.

Specifically, if the UE successfully verifies integrity of the RRC connection reconfiguration message, the UE needs to send the RRC connection reconfiguration complete message to the RAN.

In addition, to facilitate understanding of embodiments of this application, the following several descriptions are provided.

First, in this application, "indicating" may include "directly indicating" and "indirectly indicating". When a piece of indication information is described as indicating A, the indication information may directly indicate A or indirectly indicate A, but it does not necessarily mean that the indication information includes A.

Information indicated by the indication information is referred to as to-be-indicated information. In a specific implementation process, there are a plurality of manners of indicating the to-be-indicated information. The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmit end device by sending configuration information to a receive end device.

Second, "at least one" shown in this application means one or more, and "a plurality of" means two or more. In addition, in embodiments of this application, "first", "second", and various numeric numbers (for example, "#1" and "#2") are merely used for distinguishing for ease of description, and are not used to limit the scope of embodiments of this application. Sequence numbers in the following processes do not mean an execution sequence. The execution sequence of the processes should be determined based on functions and internal logic of the processes, and should not constitute any limitation on implementation processes of embodiments of this application. It should be understood that, objects described in this way may be interchangeable in proper cases, so that solutions other than embodiments of this application can be described. In addition, in embodiments of this application, words such as "510" and "520" are merely identifiers for ease of description, and do not limit a sequence of performing steps.

Third, in this application, a word "example" or "for example" represents giving an example, an illustration, or a description. Any embodiment or design scheme described as "example" or "for example" in this application should not be explained as being more preferred or having more advantages than another embodiment or design scheme. To be precise, use of the word such as "example" or "for example" is intended to present a relative concept in a specific manner.

Fourth, "stored" in embodiments of this application may be "stored in one or more memories". The one or more memories may be separately disposed, or may be integrated into an encoder or a decoder, a processor, or a communication apparatus. Alternatively, a part of the one or more memories may be separately disposed, and a part of the one or more memories are integrated into the decoder, the processor, or the communication apparatus. A type of the memory may be a storage medium in any form. This is not limited in this application.

Fifth, "protocols" in embodiments of this application may be standard protocols in the communication field, for example, may include an LTE protocol, an NR protocol, and a related protocol applied to a future communication system. This is not limited in this application.

Sixth, in embodiments of this application, "in a case of", "when", and "if" may be used interchangeably sometimes. It should be noted that, when a difference between the three is not emphasized, meanings to be expressed are consistent.

Seventh, in embodiments of this application, terms and English acronyms and abbreviations, such as radio resource control (RRC), are all examples provided for ease of description, and should not constitute any limitation on this application. This application does not exclude a possibility of defining another term that can implement same or similar functions in an existing or future protocol.

Eighth, the term "and/or" in this specification is merely an association relationship for describing associated objects, and indicates that three relationships may exist. For example, A and/or B may indicate the following three cases: Only A exists, both A and B exist, and only B exists. In addition, the character "/" in this specification generally indicates an "or" relationship between the associated objects.

The foregoing briefly describes, with reference to FIG. 1, the scenario to which the communication method provided in embodiments of this application can be applied, and describes the basic concepts that may be used in embodiments of this application. In addition, in the basic concepts, the AS SMC procedure and the security activation procedure of the user plane message are described with reference to FIG. 3 and FIG. 4. In the AS SMC procedure shown in FIG. 3, the confidentiality security protection algorithm and the integrity security protection algorithm may be negotiated. When confidentiality security protection and integrity security protection need to be performed, a potential security risk exists in a combination of the confidentiality security protection algorithm and the integrity security protection algorithm. For example, performing security protection on the user plane message by using the confidentiality security protection algorithm and the integrity security protection algorithm specifically includes: first performing integrity security protection on the user plane message based on the integrity security protection algorithm, and then performing confidentiality security protection on the user plane message by using an integrity security protection result as an input parameter of the confidentiality security protection algorithm. However, the used confidentiality security protection algorithm and the used integrity security protection algorithm are independent, and do not necessarily have a same quantity of bits. When the integrity security protection result is used as the input parameter of confidentiality security protection, algorithm splicing may exist, which poses a security risk.

If the security protection algorithm based on which user plane message negotiation is performed in the AS SMC procedure is an authenticated encryption algorithm that can implement both confidentiality security protection and integrity security protection, a user plane security protection activation procedure needs to be provided. The authenticated encryption algorithm is activated to perform security protection on the user plane message, thereby improving security of user plane message transmission.

This application provides a communication method, which may be applied to the communication system shown in FIG. 1, to improve security of user plane message transmission.

It should be understood that a specific structure of an execution body of the method provided in embodiments of this application is not specifically limited in the following embodiments, provided that communication can be performed according to the method provided in embodiments of this application by running a program that records code of the method provided in embodiments of this application. For example, the execution body of the method provided in embodiments of this application may be an access network device and a terminal device, or a functional module that can invoke a program and execute the program in the access network device and the terminal device.

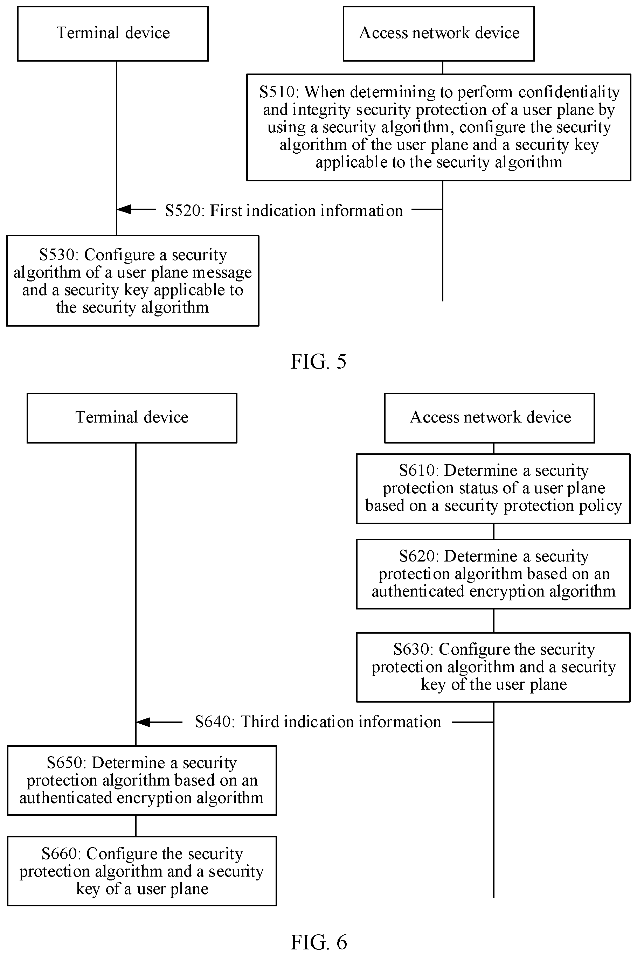

FIG. 5 is a schematic flowchart of a communication method according to this application. In the communication method, an access network device and a terminal device may negotiate, by using an AS SMC procedure, a security algorithm for performing security protection on a user plane message, or may negotiate, in another manner, a security algorithm for performing security protection on a user plane message. A specific negotiation manner is not limited in this application.

A security algorithm in the following embodiments may be the authenticated encryption algorithm described above, including a part for confidentiality protection and a part for integrity protection, and can implement both confidentiality security protection and integrity security protection. For example, the security algorithm is the AEAD algorithm shown above. The security algorithm and the authenticated encryption algorithm in embodiments of this application may be replaced with each other.

A security key in the following embodiments is an input key of the security algorithm. Based on the security key and the security algorithm, integrity security protection and confidentiality security protection are performed, or integrity check and decryption are performed on a received message. The security key is a key shared between the terminal device and the network device. For example, the security key is a key generated in a master authentication process, or the security key is a key derived based on a key generated in a master authentication process.

For ease of understanding, the following describes two possible algorithm negotiation implementations.

In a possible implementation, the access network device and the terminal device negotiate, by using the AS SMC procedure, the security protection algorithm for performing security protection on the user plane message. In this implementation, before sending an SMC message to the terminal device, the access network device selects the security protection algorithm applicable to the UP message, and then transfers the selected security protection algorithm to the terminal device by using the AS SMC message. For example, in a process in which the terminal device switches from an idle mode to a connected mode (idle-connected), the terminal device and the access network device may negotiate the security protection algorithm by using the AS SMC procedure, and activate security protection of the UP message by using an RRC reconfiguration procedure. For another example, in a process in which the terminal device switches from an inactive mode to a connected mode (inactive-connected), when a source base station and a target base station use different security protection algorithms or have different security activation statuses, the terminal device and the access network device first negotiate the security protection algorithm by using the AS SMC procedure, and then activate security protection of the UP message by using an RRC reconfiguration procedure.

For example, in this implementation, if security protection algorithms of an RRC message and the UP message are independent, the AS SMC message includes a security protection algorithm selected by the access network device for the RRC message and the security protection algorithm selected by the access network device for the UP message. It should be understood that, in embodiments, how the access network device selects the security protection algorithms of the RRC message and the UP message is not described in detail, and the access network device may select a proper security protection algorithm based on a locally configured algorithm priority, an algorithm selection policy, or a security capability of the terminal device.

For example, if the algorithm selected by the access network device for the RRC message is an authenticated encryption algorithm, and the security protection algorithm selected by the access network device for protecting the UP message is an integrity security protection algorithm and a confidentiality security protection algorithm, the AS SMC message includes an identifier of the integrity security protection algorithm, an identifier of the confidentiality security protection algorithm, and an identifier of the authenticated encryption algorithm.

For another example, if the algorithm selected by the access network device for the RRC message is an authenticated encryption algorithm #1, and the security protection algorithm selected by the access network device for protecting the UP message is an authenticated encryption algorithm #2, the AS SMC message includes an identifier of the authenticated encryption algorithm #1 and an identifier of the authenticated encryption algorithm #2.

For example, in this implementation, if the RRC message and the UP message share a security protection algorithm, the AS SMC message includes an identifier of the shared security protection algorithm selected by the access network device.

For example, if the shared security protection algorithm selected by the access network device is an integrity security protection algorithm and a confidentiality security protection algorithm, the AS SMC message includes an identifier of the integrity security protection algorithm and an identifier of the confidentiality security protection algorithm. The integrity security protection algorithm may be an algorithm determined based on an authenticated encryption algorithm (for example, an algorithm obtained by setting a part for confidentiality protection in the authenticated encryption algorithm to null, or an integrity security protection algorithm determined based on the authenticated encryption algorithm). The confidentiality security protection algorithm may be an algorithm determined based on the authenticated encryption algorithm (for example, an algorithm obtained by setting a part for integrity protection in the authenticated encryption algorithm to null, or a confidentiality security protection algorithm determined based on a correspondence and the authenticated encryption algorithm).

For another example, if the shared security protection algorithm selected by the access network device is an authenticated encryption algorithm, the AS SMC message includes an identifier of the authenticated encryption algorithm.

For example, in this implementation, if the RRC message and the UP message share a security protection algorithm, the access network device adds indication information #1 and an identifier of an integrity security protection algorithm and/or an identifier of a confidentiality security protection algorithm to the AS SMC message, where the indication information #1 indicates to perform security protection on the RRC message and the user plane message based on the authenticated encryption algorithm. The terminal device and the access network device may determine the authenticated encryption algorithm based on the integrity security protection algorithm and/or the confidentiality security protection algorithm.

For example, the AS SMC message carries the identifier of the integrity security protection algorithm and the identifier of the confidentiality security protection algorithm, and the message further carries the indication information #1. The indication information #1 indicates to use the authenticated confidentiality algorithm for a message after the SMC. The indication information #1 may also be referred to as AEAD indication information.

Optionally, the AEAD indication information may be a 1-bit value. For example, when the value of the AEAD indication information is 1, it indicates that the AEAD algorithm is used for the message after the SMC; or when the value of the AEAD indication information is 0 or is not carried, it indicates that the AEAD algorithm is not used for the message after the SMC.

Optionally, the AEAD indication information may alternatively be an identifier of a specific AEAD algorithm. When the SMC message carries the identifier of the AEAD algorithm, it indicates that the AEAD algorithm is used for the message after the SMC; or when the SMC message does not carry the identifier of the AEAD algorithm, it indicates that the AEAD algorithm is not used for the message after the SMC.

Further, after receiving the AEAD indication information, the terminal device determines an AEAD protection algorithm based on the AEAD indication information. For example, the terminal device determines the AEAD algorithm based on a selected integrity security protection algorithm and a selected confidentiality security protection algorithm. For example, if the selected integrity security protection algorithm is an SNOW integrity security protection algorithm, the determined AEAD algorithm is an SNOW-AEAD algorithm. In this implementation, the access network device may also determine an AEAD algorithm based on a selected integrity security protection algorithm and a selected confidentiality security protection algorithm.

Optionally, the terminal device may determine the AEAD algorithm after receiving an RRC connection reconfiguration message. For example, when the RRC connection reconfiguration message includes an indication for enabling integrity security protection and enabling confidentiality security protection, the terminal device determines the AEAD algorithm applicable to the UP message. An occasion for determining the AEAD algorithm by the terminal device is not limited in this application.

For example, in this implementation, if the RRC message and the UP message share a security protection algorithm, the access network device adds indication information #2 and an identifier of an authenticated encryption algorithm to the AS SMC message, where the indication information #2 indicates to perform security protection on the RRC message and the user plane message based on an integrity security protection algorithm or a confidentiality security protection algorithm. The terminal device and the access network device may determine the integrity security protection algorithm and/or the confidentiality security protection algorithm based on the authenticated encryption algorithm.

For example, the AS SMC message carries an identifier of the AEAD algorithm and the indication information #2, and the terminal device determines the integrity security protection algorithm or the confidentiality security protection algorithm based on the AEAD algorithm. For example, if the selected AEAD algorithm is an SNOW-AEAD algorithm, the integrity security protection algorithm is an SNOW integrity security protection algorithm. In this implementation, the access network device may also determine an integrity security protection algorithm or a confidentiality security protection algorithm based on a selected AEAD algorithm.

Optionally, after receiving the AS SMC message (for example, when receiving the AEAD algorithm applicable to the UP message), the terminal device may determine, based on the AEAD algorithm, the integrity security protection algorithm or the confidentiality security protection algorithm applicable to the RRC message and the UP message.

Optionally, after receiving the RRC connection reconfiguration message (for example, when the RRC connection reconfiguration message includes an indication for enabling confidentiality security protection and not enabling integrity security protection), the terminal device may determine, based on the AEAD algorithm of the UP message, the confidentiality security protection algorithm applicable to the UP message; or when the RRC connection reconfiguration message includes an indication for not enabling confidentiality security protection and enabling integrity security protection, may determine, based on the AEAD algorithm of the UP message, the integrity security protection algorithm applicable to the UP message. An occasion for determining the integrity security protection algorithm by the terminal device is not limited in this application.

In another possible implementation, the access network device may add, to an RRC reconfiguration message, an identifier of the security protection algorithm corresponding to the UP message. In this implementation, before sending the RRC reconfiguration message to the terminal device, the access network device selects the security protection algorithm of the UP message, and then transfers the selected security protection algorithm to the terminal device by using the RRC reconfiguration message. For example, in a process in which the UE is handed over from a source base station to a target base station, an algorithm negotiation procedure for the UP message may be combined into an RRC connection reconfiguration procedure, that is, the RRC connection reconfiguration message includes both the security protection algorithm and a security protection indication. The handover (Handover, HO) may be understood as Xn connection handover (that is, the access network device serving the terminal device changes, and is handed over from a source access network device to a target access network device, and there is a direct interface between the access network device and the target access network device), or N2 handover (that is, the access network device serving the terminal device changes, and there is no direct interface between the source access network device and the target access network device). Alternatively, the handover may be understood as network handover, for example, handover from a 4G network to a 5G network.

For example, in this implementation, the access network device may add an integrity security protection algorithm and a confidentiality security protection algorithm to the RRC reconfiguration message, to indicate that the security protection algorithm for protecting the UP message is the independent integrity security protection algorithm and the independent confidentiality security protection algorithm.

For example, in this implementation, the access network device may indicate, by using an identifier of an authenticated encryption algorithm carried in the RRC reconfiguration message, that the security protection algorithm for protecting the UP message is the authenticated encryption algorithm.

It should be noted that a manner of negotiating the algorithm between the terminal device and the access network device is not limited in embodiments. An example in which an algorithm negotiation result between the terminal device and the access network device is the authenticated encryption algorithm is used for description.

Specifically, in the communication method shown in FIG. 5, the following mainly describes that the algorithm negotiation result is the authenticated encryption algorithm, and security protection of a user plane based on the authenticated encryption algorithm is activated. The communication method includes the following steps.

S510: When determining to perform confidentiality and integrity security protection of the user plane by using the security algorithm, the access network device configures the security algorithm of the user plane and the security key applicable to the security algorithm.

For the access network device, confidentiality and integrity security protection of the user plane message includes: integrity check and decryption of an uplink UP message, and integrity security protection and confidentiality security protection of a downlink UP message.

For example, the integrity check and decryption performed by the access network device for the uplink UP message include: performing integrity check on the uplink UP message by using the security key as an input key of the part for integrity protection in the security algorithm, and decrypting the uplink UP message by using the security key as an input key of the part for confidentiality protection in the security algorithm.

For example, the integrity security protection and confidentiality security protection performed by the access network device for the downlink UP message include: performing integrity protection on the downlink UP message by using the security key as the input key of the part for integrity protection in the security algorithm, and performing confidentiality on the downlink UP message by using the security key as the input key of the part for confidentiality protection in the security algorithm.

It can be learned from the foregoing that, when the access network device determines to perform confidentiality and integrity security protection of the user plane by using the security algorithm, the access network device may perform integrity security protection and confidentiality security protection, or integrity check and decryption on the user plane message based on a same security key, to avoid a security risk existing in a combination of the confidentiality security protection algorithm and the integrity security protection algorithm, and improve security of user plane message transmission.

It should be noted that how to perform confidentiality and integrity security protection of the user plane by using the security algorithm is not described in detail in this application. This application mainly describes how to activate security protection of the user plane based on the security algorithm.

For example, in embodiments, that the access network device configures the security algorithm of the UP message and the security key applicable to the security algorithm includes but is not limited to the following possible implementations:

In a possible implementation, the access network device configures, on a PDCP entity, the security algorithm of the UP message and the security key applicable to the security algorithm. The PDCP entity performs security protection on the UP message by using the authenticated encryption algorithm and the security key of the UP message.

In another possible implementation, the access network device configures, on an RRC entity, the security algorithm of the UP message and the security key applicable to the security algorithm. The RRC entity performs security protection on the UP message by using the security algorithm and the security key of the UP message.

In another possible implementation, the access network device configures, on a dedicated security processing entity, the security algorithm of the UP message and the security key applicable to the security algorithm. The dedicated security processing entity performs security protection on the UP message by using the security algorithm and the security key of the UP message.

The PDCP entity, the RRC entity, or the dedicated security processing entity configured by the access network device may be a PDCP entity, an RRC entity, or a dedicated security processing entity corresponding to a DRB, or may be a PDCP entity, an RRC entity, or a dedicated security processing entity corresponding to a session, or may be a PDCP entity, an RRC entity, or a dedicated security processing entity corresponding to a DU. This is not limited herein. It indicates that a granularity of security protection of the user plane may be configuring a security protection algorithm and a security key for a DRB, or configuring a security protection algorithm and a security key for a session, or configuring a security protection algorithm and a security key for a DU, or the like. In other words, security protection of the user plane may be at different granularities.

For example, determining to perform security protection on the user plane message by using the authenticated encryption algorithm may also be understood as: determining that the algorithm negotiation result is a case in which security protection is performed on the user plane message by using the authenticated encryption algorithm, that is, a case in which the authenticated encryption algorithm is selected to perform security protection on the user plane message; and/or determining that a case in which integrity security protection and confidentiality security protection are required for the user plane message is a case in which both confidentiality and integrity security protection of the user plane are activated.

It should be noted that, in embodiments, how the access network device determines whether to perform security protection on the user plane message by using the authenticated encryption algorithm is not limited, which may be predefined, or may be determined based on the algorithm negotiation result in the AS SMC procedure.

For example, the access network device determines, based on at least one of the following information, to perform security protection on the user plane message by using the authenticated encryption algorithm:
capability information of the terminal device, a security protection policy for a user plane message, an algorithm negotiation result, or an algorithm selection policy.

The capability information of the terminal device indicates a security capability of the terminal device. For example, the security capability of the terminal device includes that a supported security protection algorithm is the authenticated encryption algorithm.

The security protection policy for a user plane message may be obtained by the access network device through a core network. For example, the terminal device sends a session request message through the access network device, where the session request message includes a session identifier, and the session identifier is used to identify a session of the terminal device. The core network device searches for a corresponding security protection policy for a user plane message based on the session identifier, and provides the security protection policy for a user plane message obtained through query for the access network device.

Optionally, the security protection policy includes a confidentiality security policy and an integrity security policy. A value of the confidentiality security policy includes required (required), preferred (preferred), and not needed (not needed). If the value of the confidentiality security policy is required, it indicates that confidentiality security protection needs to be activated. If the value of the confidentiality security policy is not needed, it indicates that confidentiality security protection does not need to be activated. If the value of the confidentiality security policy is preferred, it indicates that confidentiality security protection may be activated or may not be activated. A value of the integrity security policy includes required (required), preferred (preferred), and not needed (not needed). If the value of the integrity security policy is required, it indicates that integrity security protection needs to be activated. If the value of the integrity security policy is not needed, it indicates that integrity security protection does not need to be activated. If the value of the integrity security policy is preferred, it indicates that integrity security protection may be activated or may not be activated.

The algorithm negotiation result may be a security protection algorithm that corresponds to the UP message and that is negotiated between the access network device and the terminal device in an algorithm negotiation process. For example, the security protection algorithm that corresponds to the UP message and that is negotiated between the access network device and the terminal device in the algorithm negotiation process includes the authenticated encryption algorithm.

The algorithm selection policy may be locally configured by the access network device. For example, the algorithm selection policy is configured on the access network device, and the algorithm selection policy may be preferentially using the authenticated encryption algorithm. To be specific, when the terminal device and the access network device support a same authenticated encryption algorithm (for example, the AEAD algorithm), the authenticated encryption algorithm is selected; or otherwise, the independent integrity security protection algorithm and the independent confidentiality security protection algorithm are selected for security protection.

Optionally, the access network device may determine, based on the capability information of the terminal device, to perform security protection on the user plane message by using the authenticated encryption algorithm. For example, when the capability information of the terminal device indicates that the terminal device supports the authenticated encryption algorithm, the access network device determines to perform security protection on the user plane message by using the authenticated encryption algorithm.

Optionally, the access network device may determine, based on the security protection policy for a user plane message, to perform security protection on the user plane message by using the authenticated encryption algorithm. For example, when the security protection policy for a user plane message indicates to perform integrity security protection and confidentiality security protection on the user plane message, the access network device determines to perform security protection on the user plane message by using the authenticated encryption algorithm.

Optionally, the access network device may determine, based on the algorithm negotiation result, to perform security protection on the user plane message by using the authenticated encryption algorithm. For example, when the algorithm negotiation result includes the authenticated encryption algorithm, the access network device determines to perform security protection on the user plane message by using the authenticated encryption algorithm.

Optionally, the access network device may determine, based on the algorithm selection policy, to perform security protection on the user plane message by using the authenticated encryption algorithm. For example, when the algorithm selection policy indicates that the authenticated encryption algorithm is preferentially selected, the access network device determines to perform security protection on the user plane message by using the authenticated encryption algorithm.

In addition, the access network device may further determine, based on one or more of the information such as the capability information of the terminal device, the security protection policy for a user plane message, the algorithm negotiation result, or the algorithm selection policy, to perform security protection on the user plane message by using the authenticated encryption algorithm. Examples are not described herein one by one.

For ease of understanding, that the access network device determines whether to perform security protection on the user plane message by using the authenticated encryption algorithm is described with reference to specific examples.

### Example 1

One session is carried by a plurality of DRBs. The access network device receives a security protection policy for a user plane message for the session from the core network device, and activates security of the DRB based on the security protection policy for a user plane message .

For example, when the security protection policy for a user plane message is required, the access network device configures security of the DRB to enabled; when the security protection policy for a user plane message is not needed, the access network device configures security of the DRB to not enabled; or when the security protection policy for a user plane message is preferred, the access network device determines, based on a local policy, whether to enable security of the DRB.

Further, when security of the DRB is configured to enabled, it may be determined, based on the capability information of the terminal device, the algorithm negotiation result, or the algorithm selection policy, to enable authenticated encryption algorithm security protection, integrity security protection, or confidentiality security protection.

It should be understood that the foregoing example is merely an example for describing a manner of determining security protection of the user plane message by the access network device, and does not constitute any limitation on the protection scope of this application. In embodiments, the access network device may alternatively determine the manner of security protection of the user plane message in another manner. For example, the manner of security protection of the user plane message is determined based on historical communication data (for example, if the historical communication data shows that integrity security protection and confidentiality security protection are required for the UP message transmitted between the access network device and the terminal device, it is determined that the manner of security protection of the user plane message is integrity security protection and confidentiality security protection).

Further, the access network device may indicate, by using first indication information, the terminal device to activate integrity security protection and confidentiality security protection of the UP message. A sequence between sending, by the access network device, the first indication information to the terminal device and configuring, by the access network device, the authenticated encryption algorithm of the UP message and the security key applicable to the authenticated encryption algorithm is not limited. For example, the access network device may send the first indication information to the terminal device after configuring the authenticated encryption algorithm of the UP message and the security key applicable to the authenticated encryption algorithm, or the access network device may configure the authenticated encryption algorithm of the UP message and the security key applicable to the authenticated encryption algorithm after sending the first indication information to the terminal device.

The method procedure shown in FIG. 5 further includes the following steps.

S520: The access network device sends the first indication information to the terminal device.

Specifically, the first indication information indicates to activate integrity security protection and confidentiality security protection of the user plane message. For example, the first indication information is status information of activating integrity security protection and activating confidentiality security protection. For another example, the first indication information is an identifier of the authenticated encryption algorithm. That the first indication information is the identifier of the authenticated encryption algorithm may be understood as follows: Because the authenticated encryption algorithm can implement integrity security protection and confidentiality security protection, when the access network device sends the identifier of the authenticated encryption algorithm to the terminal device, the terminal device may determine, based on the identifier of the authenticated encryption algorithm, to activate integrity security protection and confidentiality security protection of the user plane.

For example, the first indication information indicates to activate integrity security protection and confidentiality security protection of the user plane message. For example, the first indication information includes information #1 and information #2, where the information #1 indicates to activate integrity security protection of the user plane message, and the information #2 indicates to activate confidentiality security protection of the user plane message.

For example, the access network device sends the RRC connection reconfiguration message to the terminal device, where the RRC connection reconfiguration message carries the first indication information.

For example, the access network device may further send second indication information to the terminal device, where the second indication information indicates to perform security protection on the UP message based on the authenticated encryption algorithm. For example, when determining to perform security protection on the UP message by using the authenticated encryption algorithm, the access network device sends the second indication information to the terminal device.

For example, the access network device may further send, to the terminal device, a DRB identifier, a session identifier, or a DU identifier corresponding to the second indication information, to indicate that a PDCP entity granularity configured by the terminal device is a DRB granularity, a session granularity, or a DU granularity. The second indication information indicates that a granularity of security protection of the user plane may be configuring a security protection algorithm and a security key for a DRB, or configuring a security protection algorithm and a security key for a session, or configuring a security protection algorithm and a security key for a DU, or the like. In other words, security protection of the user plane may be at different granularities.

Optionally, the first indication information, the second indication information, the DRB identifier, and the like are all carried in the RRC reconfiguration message.

S530: The terminal device configures the security algorithm of the UP message and the security key applicable to the security algorithm.

Specifically, the terminal device performs integrity check on the RRC connection reconfiguration message, and when the verification succeeds, the terminal device configures the security algorithm of the UP message and the security key applicable to the security algorithm.

For the terminal device, security protection of the UP message includes: integrity security protection and confidentiality security protection of an uplink UP message, and integrity check and decryption of a downlink UP message.

For example, the integrity check and decryption performed by the terminal device for the downlink UP message include: performing integrity check on the downlink UP message by using the security key as an input key of the part for integrity protection in the security algorithm, and decrypting the downlink UP message by using the security key as an input key of the part for confidentiality protection in the security algorithm.

For example, the integrity security protection and confidentiality security protection performed by the terminal device for the uplink UP message include: performing integrity protection on the uplink UP message by using the security key as the input key of the part for integrity protection in the security algorithm, and performing confidentiality on the uplink UP message by using the security key as the input key of the part for confidentiality protection in the security algorithm.

It can be learned from the foregoing that, when the terminal device determines to perform confidentiality and integrity security protection of the user plane by using the security algorithm, the terminal device may perform integrity security protection and confidentiality security protection, or integrity check and decryption on the user plane message based on a same security key, to avoid a security risk existing in a combination of the confidentiality security protection algorithm and the integrity security protection algorithm, and improve security of user plane message transmission.

It should be noted that how to perform confidentiality and integrity security protection of the user plane by using the security algorithm is not described in detail in this application. This application mainly describes how to activate security protection of the user plane based on the authenticated encryption algorithm.

For example, in embodiments, that the terminal device configures the authenticated encryption algorithm of the UP message and the security key applicable to the authenticated encryption algorithm includes but is not limited to the following possible implementations:
In a possible implementation, the terminal device configures, on a PDCP entity, the authenticated encryption algorithm of the UP message and the security key applicable to the authenticated encryption algorithm. The PDCP entity performs security protection on the UP message by using the authenticated encryption algorithm and the security key of the UP message.

In another possible implementation, the terminal device configures, on an RRC entity, the authenticated encryption algorithm of the UP message and the security key applicable to the authenticated encryption algorithm. The RRC entity performs security protection on the UP message by using the authenticated encryption algorithm and the security key of the UP message.

In another possible implementation, the terminal device configures, on a dedicated security processing entity, the authenticated encryption algorithm of the UP message and the security key applicable to the authenticated encryption algorithm. The dedicated security processing entity performs security protection on the UP message by using the authenticated encryption algorithm and the security key of the UP message.

The PDCP entity, the RRC entity, or the dedicated security processing entity configured by the terminal device may be a PDCP entity, an RRC entity, or a dedicated security processing entity corresponding to a DRB, or may be a PDCP entity, an RRC entity, or a dedicated security processing entity corresponding to a session, or may be a PDCP entity, an RRC entity, or a dedicated security processing entity corresponding to a DU. This is not limited herein. It indicates that a granularity of security protection of the user plane may be configuring a security protection algorithm and a security key for a DRB, or configuring a security protection algorithm and a security key for a session, or configuring a security protection algorithm and a security key for a DU, or the like. In other words, security protection of the user plane may be at different granularities.

In a possible implementation, the terminal device may determine, based on the first indication information, to activate integrity security protection and confidentiality security protection of the UP message, so that the terminal device configures the authenticated encryption algorithm of the UP message and the security key applicable to the authenticated encryption algorithm. For example, the terminal device determines, based on the first indication information, to perform security protection on the UP message by using the authenticated encryption algorithm, so that the terminal device configures the authenticated encryption algorithm of the UP message and the security key applicable to the authenticated encryption algorithm.

In another possible implementation, after receiving the first indication information, the terminal device determines, based on the first indication information, to activate integrity security protection and confidentiality security protection of the UP message, and the terminal device may determine, based on the algorithm negotiation result, to perform security protection on the UP message by using the authenticated encryption algorithm, so that the terminal device configures the authenticated encryption algorithm of the UP message and the security key applicable to the authenticated encryption algorithm. For example, the terminal device may determine, based on the first indication information, to perform security protection on the UP message by using the authenticated encryption algorithm, and the terminal device determines that the algorithm negotiation result includes the authenticated encryption algorithm, so that the terminal device configures the authenticated encryption algorithm of the UP message and the security key applicable to the authenticated encryption algorithm.

In still another possible implementation, if the terminal device receives the first indication information and the second indication information, the terminal device may determine, based on the first indication information, to activate integrity security protection and confidentiality security protection of the UP message, and the terminal device may determine, based on the second indication information, to perform security protection on the UP message by using the authenticated encryption algorithm, so that the terminal device configures the authenticated encryption algorithm of the UP message and the security key applicable to the authenticated encryption algorithm.

Optionally, if the terminal device successfully verifies integrity of the RRC connection reconfiguration message, the terminal device may send an RRC connection reconfiguration complete message to the access network device.

In the embodiment shown in FIG. 5, when the access network device and the terminal device determine to perform security protection on the user plane message by using the authenticated encryption algorithm that can implement both confidentiality security protection and integrity security protection, the access network device and the terminal device configure the authenticated encryption algorithm of the UP message and the security key applicable to the authenticated encryption algorithm, so that security protection can be performed, based on the authenticated encryption algorithm, on the user plane message subsequently transmitted between the terminal device and the access network device, thereby improving security of user plane message transmission. For example, when integrity security protection and confidentiality security protection are required for the user plane message, security protection does not need to be performed based on the integrity security protection algorithm and the confidentiality security protection algorithm, to avoid the security risk existing in the confidentiality security protection algorithm and the integrity security protection algorithm. For example, in this solution, when confidentiality security protection and integrity security protection are performed on the user plane message, security protection does not need to be separately performed based on the independent confidentiality security protection algorithm and the independent integrity security protection algorithm, and both confidentiality security protection and integrity security protection of the user plane message are performed based on the authenticated encryption algorithm, to avoid splicing of different algorithms, thereby avoiding the security risk existing in the combination of the independent confidentiality security protection algorithm and the independent integrity security protection algorithm.

It should be noted that, in the communication method shown in FIG. 5, an example in which the terminal device and the access network device negotiate to perform security protection on the UP message by using the authenticated encryption algorithm, and activate confidentiality and integrity security protection of the user plane is used for description. It should be understood that, when the terminal device and the access network device negotiate to perform security protection on the UP message by using the authenticated encryption algorithm, confidentiality security protection or integrity security protection of the user plane may be activated.

For example, in an embodiment shown in FIG. 6, that a terminal device and an access network device negotiate to perform security protection on a UP message by using an authenticated encryption algorithm, and determine, based on the authenticated encryption algorithm, a confidentiality security protection algorithm required for confidentiality security protection of a user plane may be that before the access network device indicates, by using third indication information, to activate confidentiality security protection of the user plane and not to activate integrity security protection of the user plane, the terminal device and the access network device have determined to obtain the confidentiality security protection algorithm based on the negotiated authenticated encryption algorithm. For example, the terminal device and the access network device may determine to obtain the confidentiality security protection algorithm when obtaining the authenticated encryption algorithm through negotiation in an AS SMC procedure.

Similarly, in the embodiment shown in FIG. 6, that the terminal device and the access network device negotiate to perform security protection on the UP message by using the authenticated encryption algorithm, and determine, based on the authenticated encryption algorithm, an integrity security protection algorithm required for integrity security protection of the user plane may be that before the access network device indicates, by using the third indication information, to activate integrity security protection of the user plane and not to activate confidentiality security protection of the user plane, the terminal device and the access network device have determined to obtain the integrity security protection algorithm based on the negotiated authenticated encryption algorithm. For example, the terminal device and the access network device may determine to obtain the integrity security protection algorithm when obtaining the authenticated encryption algorithm through negotiation in the AS SMC procedure.

In addition, the terminal device and the access network device may alternatively determine, based on the authenticated encryption algorithm, the confidentiality security protection algorithm required for confidentiality security protection of the user plane after the access network device indicates, by using the third indication information, to activate confidentiality security protection of the user plane and not to activate integrity security protection of the user plane. For example, after receiving the third indication information, the terminal device determines to activate confidentiality security protection of the user plane and not to activate integrity security protection of the user plane, and then determines the confidentiality security protection algorithm based on the authenticated encryption algorithm obtained through negotiation.

Similarly, the terminal device and the access network device may alternatively determine, based on the authenticated encryption algorithm, the integrity security protection algorithm required for integrity security protection of the user plane after the access network device indicates, by using the third indication information, to activate integrity security protection of the user plane and not to activate confidentiality security protection of the user plane. For example, after receiving the third indication information, the terminal device determines to activate integrity security protection of the user plane and not to activate confidentiality security protection of the user plane, and then determines the integrity security protection algorithm based on the authenticated encryption algorithm obtained through negotiation.

With reference to FIG. 6, the following describes in detail that an algorithm negotiation result is an authenticated encryption algorithm, and confidentiality security protection or integrity security protection of the user plane is activated. The communication method includes the following steps.

S610: The access network device determines a security protection status of the user plane based on a security protection policy.

The security protection policy includes a confidentiality security policy and an integrity security policy.

A value of the confidentiality security policy includes required (required), preferred (preferred), and not needed (not needed). If the value of the confidentiality security policy is required, it indicates that confidentiality security protection needs to be activated. If the value of the confidentiality security policy is not needed, it indicates that confidentiality security protection does not need to be activated. If the value of the confidentiality security policy is preferred, it indicates that confidentiality security protection may be activated or may not be activated. A value of the integrity security policy includes required (required), preferred (preferred), and not needed (not needed). If the value of the integrity security policy is required, it indicates that integrity security protection needs to be activated. If the value of the integrity security policy is not needed, it indicates that integrity security protection does not need to be activated. If the value of the integrity security policy is preferred, it indicates that integrity security protection may be activated or may not be activated.

In embodiments, that the access network device determines the security protection status of the user plane based on the security protection policy includes: The access network device determines, based on the security protection policy, to enable confidentiality security protection of the user plane and not to enable integrity security protection; or the access network device determines, based on the security protection policy, to enable integrity security protection of the user plane and not to enable confidentiality security protection.

S620: The access network device determines a security protection algorithm based on the authenticated encryption algorithm.

For example, the access network device may determine, based on the negotiated authenticated encryption algorithm, the confidentiality security protection algorithm required for confidentiality security protection of the user plane and/or the integrity security protection algorithm required for integrity security protection of the user plane.

For example, the access network device may determine the confidentiality security protection algorithm and/or the integrity security protection algorithm when obtaining the authenticated encryption algorithm through negotiation in the AS SMC procedure.

For another example, after determining to activate integrity security protection of the user plane and not to activate confidentiality security protection of the user plane, the access network device determines the integrity security protection algorithm based on the authenticated encryption algorithm obtained through negotiation; or after determining to activate confidentiality security protection of the user plane and not to activate integrity security protection of the user plane, the access network device determines the confidentiality security protection algorithm based on the authenticated encryption algorithm obtained through negotiation.

In embodiments, an occasion for determining, by the access network device based on the negotiated authenticated encryption algorithm, the confidentiality security protection algorithm required for confidentiality security protection of the user plane and/or the integrity security protection algorithm required for integrity security protection of the user plane is not limited. Before security protection based on the confidentiality security protection algorithm or the integrity security protection algorithm needs to be activated, the confidentiality security protection algorithm or the integrity security protection algorithm needs to be determined based on the authenticated encryption algorithm.

S630: The access network device configures the security protection algorithm and a security key of the user plane.

In embodiments, because the terminal device and the access network device negotiate to perform security protection on the UP message by using the authenticated encryption algorithm, if the access network device determines, based on the security protection policy, to activate confidentiality security protection of the user plane and not to activate integrity security protection of the user plane, the access network device may configure the confidentiality security protection algorithm of the user plane and a key corresponding to the confidentiality security protection algorithm; or if the access network device determines, based on the security protection policy, to activate integrity security protection of the user plane and not to activate confidentiality security protection of the user plane, the access network device may configure the integrity security protection algorithm of the user plane and a key corresponding to the integrity security protection algorithm. The key corresponding to the confidentiality security protection algorithm and the key corresponding to the integrity security protection algorithm may be the same as or different from a security key corresponding to the authenticated encryption algorithm. This is not limited in this application.

For example, the access network device may configure the security protection algorithm and the security key of the user plane on a PDCP entity, an RRC entity, or a dedicated security processing entity.

In embodiments, that the access network device configures the security protection algorithm and the security key of the user plane includes the following two possible implementations:
In a possible implementation, if a security activation status of the UP message is activating integrity security protection of the UP message and not activating confidentiality security protection of the UP message, the access network device configures the integrity security protection key and the integrity security protection algorithm of the UP message. The integrity security protection algorithm may be determined based on the authenticated encryption algorithm. For example, if the negotiated authenticated encryption algorithm is an SNOW-AEAD algorithm, the determined security protection algorithm is an SNOW integrity security protection algorithm. Alternatively, the integrity security protection algorithm may be an algorithm obtained by setting a part for confidentiality protection in the authenticated encryption algorithm to null.

In another possible implementation, if a security activation status of the UP message is activating confidentiality security protection of the UP message and not activating integrity security protection of the UP message, the access network device configures the confidentiality security protection key and the confidentiality security protection algorithm of the UP message. The confidentiality security protection algorithm may be determined based on the authenticated encryption algorithm. For example, if the negotiated authenticated encryption algorithm is an SNOW-AEAD algorithm, the determined security protection algorithm is an SNOW confidentiality security protection algorithm. Alternatively, the confidentiality security protection algorithm may be an algorithm obtained by setting a part for integrity protection in the authenticated encryption algorithm to null.

For example, when determining that the security activation status of the UP message is activating integrity security protection of the UP message and not activating confidentiality security protection of the UP message, the access network device may indicate, by using the third indication information, the terminal device to configure the security protection algorithm and a security key of the user plane in S660.

In embodiments, because the terminal device and the access network device negotiate to perform security protection on the UP message by using the authenticated encryption algorithm, if the terminal device determines, based on the third indication information, to activate confidentiality security protection of the user plane and not to activate integrity security protection of the user plane, the terminal device may configure the confidentiality security protection algorithm of the user plane and a key corresponding to the confidentiality security protection algorithm; or if the terminal device determines, based on the third indication information, to activate integrity security protection of the user plane and not to activate confidentiality security protection of the user plane, the access network device may configure the integrity security protection algorithm of the user plane and a key corresponding to the integrity security protection algorithm.

For example, the terminal device may configure the security protection algorithm and the security key of the user plane on a PDCP entity, an RRC entity, or a dedicated security processing entity.

In a possible implementation, if a security activation status of the UP message is activating integrity security protection of the UP message and not activating confidentiality security protection of the UP message, the terminal device configures the integrity security protection key and the integrity security protection algorithm of the UP message. The integrity security protection algorithm may be determined based on the authenticated encryption algorithm. For example, if the negotiated authenticated encryption algorithm is an SNOW-AEAD algorithm, the determined security protection algorithm is an SNOW integrity security protection algorithm. Alternatively, the integrity security protection algorithm may be an algorithm obtained by setting a part for confidentiality protection in the authenticated encryption algorithm to null.

In another possible implementation, if a security activation status of the UP message is activating confidentiality security protection of the UP message and not activating integrity security protection of the UP message, the terminal device configures the confidentiality security protection key and the confidentiality security protection algorithm of the UP message. The confidentiality security protection algorithm may be determined based on the authenticated encryption algorithm. For example, if the negotiated authenticated encryption algorithm is an SNOW-AEAD algorithm, the determined security protection algorithm is an SNOW confidentiality security protection algorithm. Alternatively, the confidentiality security protection algorithm may be an algorithm obtained by setting a part for integrity protection in the authenticated encryption algorithm to null.

In the communication method shown in FIG. 6, when the access network device determines, based on the security protection policy, to activate integrity security protection or confidentiality security protection of the user plane, but the negotiation result in an algorithm negotiation process is the authenticated encryption algorithm, the access network device and the terminal device may still determine the required integrity security protection algorithm or confidentiality security protection algorithm based on the authenticated encryption algorithm, so that security protection of the user plane can still be implemented when the algorithm negotiation result does not match the security protection policy.

The communication methods shown in FIG. 5 and FIG. 6 mainly describe that the algorithm negotiation result between the terminal device and the access network device is the authenticated encryption algorithm. It should be understood that the terminal device and the access network device may further negotiate to perform security protection on the UP message by using the integrity security protection algorithm and/or the confidentiality security protection algorithm. For example, the algorithm negotiation result between the terminal device and the access network device is the integrity security protection algorithm and/or the confidentiality security protection algorithm. When integrity security protection and confidentiality security protection of the user plane are activated, the authenticated encryption algorithm may be determined based on the integrity security protection algorithm and/or the confidentiality security protection algorithm, and security protection is performed on the user plane message based on the determined authenticated encryption algorithm. A specific determining manner is not described herein. For another example, the algorithm negotiation result between the terminal device and the access network device is the authenticated encryption algorithm. When integrity security protection and confidentiality security protection of the user plane are activated, the integrity security protection algorithm and the confidentiality security protection algorithm may be determined based on the authenticated encryption algorithm, and security protection is performed on the user plane message based on the determined integrity security protection algorithm and the determined confidentiality security protection algorithm. A specific determining manner is not described herein.

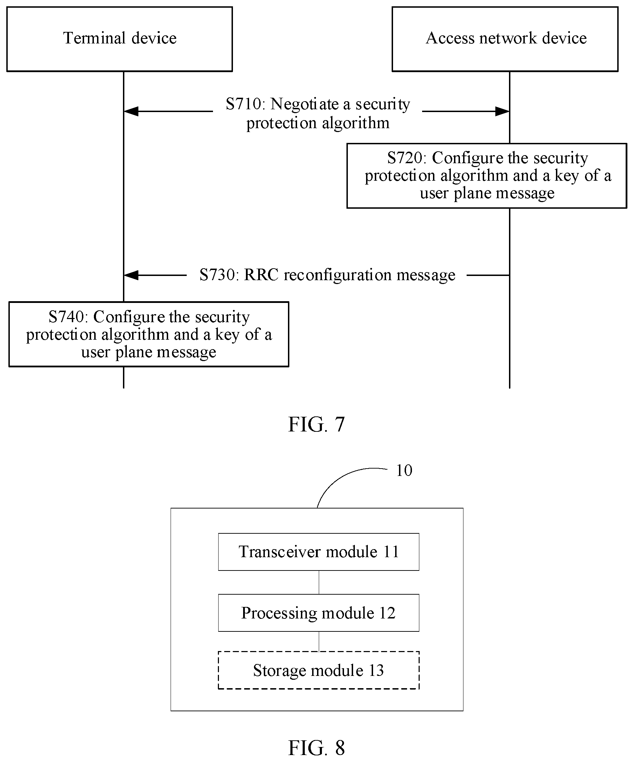

For ease of understanding, with reference to FIG. 7, the following describes in detail a manner in which a terminal device and an access network device configure a security protection algorithm and a key of a UP message when the terminal device and the access network device negotiate to perform security protection on the UP message by using different security protection algorithms.

FIG. 7 is a schematic flowchart of still another communication method according to an embodiment of this application. The method includes the following steps.

S710: The terminal device and the access network device negotiate the security protection algorithm.

That the terminal device and the access network device negotiate the security protection algorithm includes but is not limited to negotiating a security protection algorithm applicable to an RRC message and/or a UP message. Embodiments mainly relate to negotiating, between the terminal device and the access network device, the security protection algorithm applicable to the UP message, and activating security protection of the UP message.

The security protection algorithm negotiated between the terminal device and the access network device includes at least one of an authenticated encryption algorithm, an integrity security protection algorithm, and an encryption security protection algorithm.

For example, for the terminal device, security protection of the UP message includes: integrity security protection and encryption security protection of an uplink UP message, and integrity check and decryption of a downlink UP message.

For example, for the access network device, security protection of the UP message includes: integrity check and decryption of an uplink UP message, and integrity security protection and encryption security protection of a downlink UP message.

A specific algorithm negotiation procedure is not limited in embodiments, and includes but is not limited to the following possible algorithm negotiation manners:

In a possible implementation, the terminal device and the access network device may negotiate the security protection algorithm by using an AS SMC procedure. In this implementation, before sending an SMC message to the terminal device, the access network device selects the security protection algorithm applicable to the UP message, and then transfers the selected security protection algorithm to the terminal device by using the SMC message.

For example, the security protection algorithm selected by the access network device for the UP message based on a security capability of the terminal device, a local algorithm selection policy, or a locally configured algorithm priority is one or more of an authenticated encryption algorithm, an independent integrity security protection algorithm, and an independent encryption security protection algorithm.

For example, in a process in which the terminal device switches from an idle mode to a connected mode (idle-connected), the terminal device and the access network device may negotiate the security protection algorithm by using the AS SMC procedure, and activate security protection of the UP message by using an RRC reconfiguration procedure.

For example, in a process in which the terminal device switches from an inactive mode to a connected mode (inactive-connected), when a source base station and a target base station use different security protection algorithms or have different security activation statuses, the terminal device and the access network device first negotiate the security protection algorithm by using the AS SMC procedure, and then activate security protection of the UP message by using an RRC reconfiguration procedure.

In another possible implementation, the terminal device and the access network device may negotiate the security protection algorithm by using an RRC reconfiguration message. In this implementation, before sending the RRC reconfiguration message to the terminal device, the access network device selects the security protection algorithm of the UP message, and then transfers the selected security protection algorithm to the terminal device by using the RRC reconfiguration message.

For example, the security protection algorithm selected by the access network device for the UP message based on a security capability of the terminal device, a local algorithm selection policy, or a locally configured algorithm priority is at least one of an authenticated encryption algorithm, an independent integrity security protection algorithm, and an independent encryption security protection algorithm, and the access network device may transfer the selected security protection algorithm to the terminal device by using the RRC reconfiguration message.

For example, in a process in which the UE is handed over from a source base station to a target base station, an algorithm negotiation procedure for the UP message may be combined into an RRC connection reconfiguration procedure, that is, the RRC connection reconfiguration message includes both the security protection algorithm and a security protection indication. The handover (Handover, HO) may be understood as Xn connection handover (that is, the access network device serving the terminal device changes, and is handed over from a source access network device to a target access network device, and there is a direct interface between the access network device and the target access network device), or N2 handover (that is, the access network device serving the terminal device changes, and there is no direct interface between the source access network device and the target access network device). Alternatively, the handover may be understood as network handover, for example, handover from a 4G network to a 5G network.

For ease of description, in embodiments, an example in which the terminal device and the access network device negotiate the security protection algorithm by using the AS SMC procedure and activate the security protection algorithm of the UP message by using the RRC reconfiguration procedure is used for description. Other algorithm negotiation manners are not described again.

S720: The access network device configures the security protection algorithm and the key of the UP message.

For example, the access network device may configure the security protection algorithm and the key of the UP message based on a security protection algorithm negotiation result and a security activation status of the UP message. Optionally, in embodiments, that the access network device configures the security protection algorithm and the key of the UP message includes but is not limited to the following possible implementations:

In a possible implementation, if the security protection algorithm negotiation result includes an authenticated encryption algorithm, and the security activation status of the UP message is activating integrity security protection and encryption security protection of the UP message, the access network device configures an authenticated encryption algorithm of the UP message and a key applicable to the authenticated encryption algorithm.

In another possible implementation, if the security protection algorithm negotiation result includes an authenticated encryption algorithm, and the security activation status of the UP message is activating integrity security protection and encryption security protection of the UP message, the access network device configures an integrity security protection key and an integrity security protection algorithm of the UP message, and an encryption security protection key and an encryption security protection algorithm of the UP. The integrity security protection algorithm and the encryption security protection algorithm may be determined based on the authenticated encryption algorithm. For example, if the negotiated authenticated encryption algorithm is an SNOW-AEAD algorithm, the mapped security protection algorithm is an SNOW integrity security protection algorithm and an SNOW encryption security protection algorithm. Alternatively, the integrity security protection algorithm may be a part for integrity protection in the authenticated encryption algorithm, and the encryption security protection algorithm may be a part for encryption protection in the authenticated encryption algorithm.

In still another possible implementation, if the security protection algorithm negotiation result includes an authenticated encryption algorithm, and the security activation status of the UP message is activating integrity security protection of the UP message and not activating encryption security protection of the UP message, the access network device configures an integrity security protection key and an integrity security protection algorithm of the UP message. The integrity security protection algorithm may be determined based on the authenticated encryption algorithm. For example, if the negotiated authenticated encryption algorithm is an SNOW-AEAD algorithm, the mapped security protection algorithm is an SNOW integrity security protection algorithm. Alternatively, the integrity security protection algorithm may be a part for integrity protection in the authenticated encryption algorithm.

In still another possible implementation, if the security protection algorithm negotiation result includes an authenticated encryption algorithm, and the security activation status of the UP message is activating encryption security protection of the UP message and not activating integrity security protection of the UP message, the access network device configures an encryption security protection key and an encryption security protection algorithm of the UP message. The encryption security protection algorithm may be determined based on the authenticated encryption algorithm. For example, if the negotiated authenticated encryption algorithm is an SNOW-AEAD algorithm, the mapped security protection algorithm is an SNOW encryption security protection algorithm. Alternatively, the encryption security protection algorithm may be a part for encryption protection in the authenticated encryption algorithm.

In still another possible implementation, if the security protection algorithm negotiation result includes an integrity security protection algorithm and an encryption security protection algorithm, and the security activation status of the UP message is activating integrity security protection and encryption security protection of the UP message, the access network device configures an authenticated encryption algorithm of the UP message and a key applicable to the authenticated encryption algorithm. The authenticated encryption algorithm may be determined based on the integrity security protection algorithm and the encryption security protection algorithm. For example, if the negotiated integrity security protection algorithm and the negotiated encryption security protection algorithm are an SNOW integrity security protection algorithm and an SNOW encryption security protection algorithm, the mapped authenticated encryption algorithm is an SNOW-AEAD algorithm.

In still another possible implementation, if the security protection algorithm negotiation result includes an integrity security protection algorithm, and the security activation status of the UP message is activating integrity security protection and encryption security protection of the UP message, the access network device configures an authenticated encryption algorithm of the UP message and a key applicable to the authenticated encryption algorithm. The authenticated encryption algorithm may be determined based on the integrity security protection algorithm. For example, if the negotiated integrity security protection algorithm is an SNOW integrity security protection algorithm, the mapped authenticated encryption algorithm is an SNOW-AEAD algorithm.

In still another possible implementation, if the security protection algorithm negotiation result includes an encryption security protection algorithm, and the security activation status of the UP message is activating integrity security protection and encryption security protection of the UP message, the access network device configures an authenticated encryption algorithm of the UP message and a key applicable to the authenticated encryption algorithm. The authenticated encryption algorithm may be determined based on the encryption security protection algorithm. For example, if the negotiated encryption security protection algorithm is an SNOW encryption security protection algorithm, the mapped authenticated encryption algorithm is an SNOW-AEAD algorithm.

In still another possible implementation, if the security protection algorithm negotiation result includes an integrity security protection algorithm and an encryption security protection algorithm, and the security activation status of the UP message is activating integrity security protection and encryption security protection of the UP message, the access network device configures an integrity security protection key and an integrity security protection algorithm of the UP message, and an encryption security protection key and an encryption security protection algorithm of the UP.

In still another possible implementation, if the security protection algorithm negotiation result includes an integrity security protection algorithm, and the security activation status of the UP message is activating integrity security protection of the UP message and not activating encryption security protection of the UP message, the access network device configures an integrity security protection key and an integrity security protection algorithm of the UP message.

In still another possible implementation, if the security protection algorithm negotiation result includes encryption security protection, and the security activation status of the UP message is activating encryption security protection of the UP message and not activating integrity security protection of the UP message, the access network device configures an encryption security protection key and an encryption security protection algorithm of the UP message.

In still another possible implementation, if the security protection algorithm negotiation result includes an authenticated encryption algorithm, an integrity security protection algorithm, and an encryption security protection algorithm, and the security activation status of the UP message is activating integrity security protection and encryption security protection of the UP message, the access network device configures an authenticated encryption algorithm of the UP message and a key applicable to the authenticated encryption algorithm.

In still another possible implementation, if the security protection algorithm negotiation result includes an authenticated encryption algorithm, an integrity security protection algorithm, and an encryption security protection algorithm, and the security activation status of the UP message is activating integrity security protection of the UP message and not activating encryption security protection of the UP message, the access network device configures an integrity security protection key and an integrity security protection algorithm of the UP message.

In still another possible implementation, if the security protection algorithm negotiation result includes an authenticated encryption algorithm, an integrity security protection algorithm, and an encryption security protection algorithm, and the security activation status of the UP message is activating encryption security protection of the UP message and not activating integrity security protection of the UP message, the access network device configures an encryption security protection key and an encryption security protection algorithm of the UP message.

Specifically, after the access network device determines to perform security protection on the UP message by using the security protection algorithm, the access network device activates integrity security protection and/or encryption security protection of the UP message based on the security protection algorithm.

Further, after the terminal device and the access network device negotiate the security protection algorithm by using the AS SMC procedure, the access network device may indicate, by using the RRC reconfiguration information, the terminal device to activate integrity security protection and/or encryption security protection of the UP message. The method procedure shown in FIG. 6 further includes the following steps.

S730: The access network device sends the RRC reconfiguration message to the terminal device.

For example, the RRC reconfiguration message indicates integrity security protection and/or encryption security protection of the UP message.

Optionally, the RRC reconfiguration message includes second indication information, and the second indication information indicates whether to perform security protection on the UP message based on the authenticated encryption algorithm.

S740: The terminal device configures the security protection algorithm and the key of the UP message.

For example, the terminal device may configure the security protection algorithm and the key of the UP message based on a security protection algorithm negotiation result and an activation status of the UP message. Optionally, in embodiments, that the terminal device configures the security protection algorithm and the key of the UP message includes but is not limited to the following possible implementations:

In a possible implementation, if the security protection algorithm negotiation result includes an authenticated encryption algorithm, and the security activation status of the UP message is activating integrity security protection and encryption security protection of the UP message, the terminal device configures an authenticated encryption algorithm of the UP message and a key applicable to the authenticated encryption algorithm.

In another possible implementation, if the security protection algorithm negotiation result includes an authenticated encryption algorithm, and the security activation status of the UP message is activating integrity security protection and encryption security protection of the UP message, the terminal device configures an integrity security protection key and an integrity security protection algorithm of the UP message, and an encryption security protection key and an encryption security protection algorithm of the UP. The integrity security protection algorithm and the encryption security protection algorithm may be determined based on the authenticated encryption algorithm. For example, if the negotiated authenticated encryption algorithm is an SNOW-AEAD algorithm, the mapped security protection algorithm is an SNOW integrity security protection algorithm and an SNOW encryption security protection algorithm. Alternatively, the integrity security protection algorithm may be a part for integrity protection in the authenticated encryption algorithm, and the encryption security protection algorithm may be a part for encryption protection in the authenticated encryption algorithm.

In still another possible implementation, if the security protection algorithm negotiation result includes an authenticated encryption algorithm, and the security activation status of the UP message is activating integrity security protection of the UP message and not activating encryption security protection of the UP message, the terminal device configures an integrity security protection key and an integrity security protection algorithm of the UP message. The integrity security protection algorithm may be determined based on the authenticated encryption algorithm. For example, if the negotiated authenticated encryption algorithm is an SNOW-AEAD algorithm, the mapped security protection algorithm is an SNOW integrity security protection algorithm. Alternatively, the integrity security protection algorithm may be a part for integrity protection in the authenticated encryption algorithm.

In still another possible implementation, if the security protection algorithm negotiation result includes an authenticated encryption algorithm, and the security activation status of the UP message is activating encryption security protection of the UP message and not activating integrity security protection of the UP message, the terminal device configures an encryption security protection key and an encryption security protection algorithm of the UP message. The encryption security protection algorithm may be determined based on the authenticated encryption algorithm. For example, if the negotiated authenticated encryption algorithm is an SNOW-AEAD algorithm, the mapped security protection algorithm is an SNOW encryption security protection algorithm. Alternatively, the encryption security protection algorithm may be a part for encryption protection in the authenticated encryption algorithm.

In still another possible implementation, if the security protection algorithm negotiation result includes an integrity security protection algorithm and an encryption security protection algorithm, and the security activation status of the UP message is activating integrity security protection and encryption security protection of the UP message, the terminal device configures an authenticated encryption algorithm of the UP message and a key applicable to the authenticated encryption algorithm. The authenticated encryption algorithm may be determined based on the integrity security protection algorithm and the encryption security protection algorithm. For example, if the negotiated integrity security protection algorithm and the negotiated encryption security protection algorithm are an SNOW integrity security protection algorithm and an SNOW encryption security protection algorithm, the mapped authenticated encryption algorithm is an SNOW-AEAD algorithm.

In still another possible implementation, if the security protection algorithm negotiation result includes an integrity security protection algorithm, and the security activation status of the UP message is activating integrity security protection and encryption security protection of the UP message, the terminal device configures an authenticated encryption algorithm of the UP message and a key applicable to the authenticated encryption algorithm. The authenticated encryption algorithm may be determined based on the integrity security protection algorithm. For example, if the negotiated integrity security protection algorithm is an SNOW integrity security protection algorithm, the mapped authenticated encryption algorithm is an SNOW-AEAD algorithm.

In still another possible implementation, if the security protection algorithm negotiation result includes an encryption security protection algorithm, and the security activation status of the UP message is activating integrity security protection and encryption security protection of the UP message, the terminal device configures an authenticated encryption algorithm of the UP message and a key applicable to the authenticated encryption algorithm. The authenticated encryption algorithm may be determined based on the encryption security protection algorithm. For example, if the negotiated encryption security protection algorithm is an SNOW encryption security protection algorithm, the mapped authenticated encryption algorithm is an SNOW-AEAD algorithm.

In still another possible implementation, if the security protection algorithm negotiation result includes an integrity security protection algorithm and an encryption security protection algorithm, and the security activation status of the UP message is activating integrity security protection and encryption security protection of the UP message, the terminal device configures an integrity security protection key and an integrity security protection algorithm of the UP message, and an encryption security protection key and an encryption security protection algorithm of the UP.

In still another possible implementation, if the security protection algorithm negotiation result includes an integrity security protection algorithm, and the security activation status of the UP message is activating integrity security protection of the UP message and not activating encryption security protection of the UP message, the terminal device configures an integrity security protection key and an integrity security protection algorithm of the UP message.

In still another possible implementation, if the security protection algorithm negotiation result includes encryption security protection, and the security activation status of the UP message is activating encryption security protection of the UP message and not activating integrity security protection of the UP message, the terminal device configures an encryption security protection key and an encryption security protection algorithm of the UP message.

In still another possible implementation, if the security protection algorithm negotiation result includes an authenticated encryption algorithm, an integrity security protection algorithm, and an encryption security protection algorithm, and the security activation status of the UP message is activating integrity security protection and encryption security protection of the UP message, the terminal device configures an authenticated encryption algorithm of the UP message and a key applicable to the authenticated encryption algorithm.

In still another possible implementation, if the security protection algorithm negotiation result includes an authenticated encryption algorithm, an integrity security protection algorithm, and an encryption security protection algorithm, and the security activation status of the UP message is activating integrity security protection of the UP message and not activating encryption security protection of the UP message, the terminal device configures an integrity security protection key and an integrity security protection algorithm of the UP message.

In still another possible implementation, if the security protection algorithm negotiation result includes an authenticated encryption algorithm, an integrity security protection algorithm, and an encryption security protection algorithm, and the security activation status of the UP message is activating encryption security protection of the UP message and not activating integrity security protection of the UP message, the terminal device configures an encryption security protection key and an encryption security protection algorithm of the UP message.

For example, if the access network device indicates, by using the second indication information, whether security protection is performed on the UP message based on the authenticated encryption algorithm, the terminal device may configure the security protection algorithm and the key of the UP message based on the security protection algorithm negotiation result, the activation status of the UP message, and the second indication information. Optionally, in embodiments, that the terminal device configures the security protection algorithm and the key of the UP message includes but is not limited to the following possible implementations:

In a possible implementation, if the security protection algorithm negotiation result includes an authenticated encryption algorithm, the security activation status of the UP message is activating integrity security protection and encryption security protection of the UP message, and the second indication information indicates to perform security protection on the UP message based on the authenticated encryption algorithm, the terminal device configures an authenticated encryption algorithm of the UP message and a key applicable to the authenticated encryption algorithm.

In another possible implementation, if the security protection algorithm negotiation result includes an authenticated encryption algorithm, the security activation status of the UP message is activating integrity security protection and encryption security protection of the UP message, and the second indication information indicates not to perform security protection on the UP message based on the authenticated encryption algorithm, the terminal device determines an independent integrity security protection algorithm and an independent encryption security protection algorithm based on the authenticated encryption algorithm, and configures an integrity security protection key and an integrity security protection algorithm of the UP message, and an encryption security protection key and an encryption security protection algorithm of the UP. For example, if the negotiated authenticated encryption algorithm is an SNOW-AEAD algorithm, the mapped security protection algorithm is an SNOW integrity security protection algorithm and an SNOW encryption security protection algorithm.

In still another possible implementation, if the security protection algorithm negotiation result includes an encryption security protection algorithm and an integrity security protection algorithm, the security activation status of the UP message is activating integrity security protection and encryption security protection of the UP message, and the second indication information indicates to perform security protection on the UP message based on an authenticated encryption algorithm, the terminal device determines the authenticated encryption algorithm based on the independent encryption security protection algorithm and the independent integrity security protection algorithm, and further configures an authenticated encryption algorithm of the UP message and a key applicable to the authenticated encryption algorithm. For example, if the independent encryption security protection algorithm and the independent integrity security protection algorithm are an SNOW integrity security protection algorithm and an SNOW encryption security protection algorithm, the mapped authenticated encryption algorithm is an SNOW-AEAD algorithm.

In still another possible implementation, if the security protection algorithm negotiation result includes an encryption security protection algorithm, the security activation status of the UP message is activating integrity security protection and encryption security protection of the UP message, and the second indication information indicates to perform security protection on the UP message based on an authenticated encryption algorithm, the terminal device determines the authenticated encryption algorithm based on the encryption security protection algorithm, and further configures an authenticated encryption algorithm of the UP message and a key applicable to the authenticated encryption algorithm. For example, if the encryption security protection algorithm is an SNOW encryption security protection algorithm, the mapped authenticated encryption algorithm is an SNOW-AEAD algorithm.

In still another possible implementation, if the security protection algorithm negotiation result includes an integrity security protection algorithm, the security activation status of the UP message is activating integrity security protection and encryption security protection of the UP message, and the second indication information indicates to perform security protection on the UP message based on an authenticated encryption algorithm, the terminal device determines the authenticated encryption algorithm based on the integrity security protection algorithm, and further configures an authenticated encryption algorithm of the UP message and a key applicable to the authenticated encryption algorithm. For example, if the integrity security protection algorithm is an SNOW integrity security protection algorithm, the mapped authenticated encryption algorithm is an SNOW-AEAD algorithm.

In still another possible implementation, if the security protection algorithm negotiation result includes an authenticated encryption algorithm, an integrity security protection algorithm, and an encryption security protection algorithm, the security activation status of the UP message is activating integrity security protection and encryption security protection of the UP message, and the second indication information indicates to perform security protection on the UP message based on the authenticated encryption algorithm, the terminal device configures an authenticated encryption algorithm of the UP message and a key applicable to the authenticated encryption algorithm.

In still another possible implementation, if the security protection algorithm negotiation result includes an authenticated encryption algorithm, an integrity security protection algorithm, and an encryption security protection algorithm, the security activation status of the UP message is activating integrity security protection and encryption security protection of the UP message, and the second indication information indicates not to perform security protection on the UP message based on the authenticated encryption algorithm, the terminal device configures an integrity security protection key and an integrity security protection algorithm of the UP message, and an encryption security protection key and an encryption security protection algorithm of the UP. Further, after the terminal device determines to perform security protection on the UP message by using the security protection algorithm, the terminal device activates integrity security protection and/or encryption security protection of the UP message based on the security protection algorithm.

Optionally, if the terminal device successfully verifies integrity of the RRC connection reconfiguration message, the terminal device may send an RRC connection reconfiguration complete message to the access network device. In the communication method shown in FIG. 7, the terminal device and the access network device may negotiate the security protection algorithm, and activate security protection of the UP message by using the RRC reconfiguration procedure. In some cases, the security protection algorithm negotiated between the terminal device and the access network device may be the authenticated encryption algorithm that can implement both encryption security protection and integrity security protection, to improve security. In some cases, the security protection algorithm negotiated between the terminal device and the access network device may be the independent integrity security protection algorithm and/or the independent encryption security protection algorithm, to improve backward compatibility of the solution.

It should be understood that sequence numbers of the foregoing processes do not mean an execution sequence. The execution sequence of the processes should be determined based on functions and internal logic of the processes, and should not be construed as any limitation on implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be further understood that, in some of the foregoing embodiments, a device (for example, UE or a RAN) in an existing network architecture is mainly used as an example for description. It should be understood that a specific form of the device is not limited in embodiments of this application. For example, all devices that can implement a same function in the future are applicable to embodiments of this application.

It may be understood that, in the foregoing method embodiments, methods and operations implemented by the device (for example, the UE or the RAN) may alternatively be implemented by a component (for example, a chip or a circuit) of the device.

The foregoing describes in detail the communication method provided in embodiments of this application with reference to FIG. 5 to FIG. 7. The foregoing communication method is mainly described from a perspective of interaction between the terminal device and the access network device. It may be understood that, to implement the foregoing functions, the terminal device and the access network device include corresponding hardware structures and/or software modules for performing the functions.

A person skilled in the art may be aware that, with reference to the examples described in embodiments disclosed in this specification, units and algorithm steps can be implemented by hardware or a combination of computer software and hardware in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

The following describes in detail a communication apparatus provided in this application with reference to FIG. 8 to FIG. 10. It should be understood that descriptions of apparatus embodiments correspond to the descriptions of the method embodiments. Therefore, for content that is not described in detail, refer to the foregoing method embodiments. For brevity, some content is not described again.

In embodiments of this application, functional modules of a transmit end device or a receive end device may be obtained through division based on the foregoing method examples. For example, each functional module may be obtained through division based on each function, or two or more functions may be integrated into one processing module. The integrated module may be implemented in a form of hardware, or may be implemented in a form of a software functional module. It should be noted that, in embodiments of this application, division into modules is an example, and is merely a logical function division. In actual implementation, another division manner may be used. An example in which each functional module is obtained through division based on each corresponding function is used below for description.

FIG. 8 is a block diagram of a communication apparatus 10 according to an embodiment of this application. The apparatus 10 includes a transceiver module 11 and a processing module 12. The transceiver module 11 may implement a corresponding communication function, and the processing module 12 is configured to perform data processing; or the transceiver module 11 is configured to perform operations related to receiving and sending, and the processing module 12 is configured to perform an operation other than receiving and sending. The transceiver module 11 may also be referred to as a communication interface or a communication unit.

Optionally, the apparatus 10 may further include a storage module 13. The storage module 13 may be configured to store instructions and/or data. The processing module 12 may read the instructions and/or the data in the storage module, to enable the apparatus to implement actions of the device in the foregoing method embodiments.

In a design, the apparatus 10 may correspond to the UE in the foregoing method embodiments, or a component (for example, a chip) of the UE.

The apparatus 10 may implement corresponding steps or procedures performed by the UE in the foregoing method embodiments. The transceiver module 11 may be configured to perform operations related to receiving and sending of the UE in the foregoing method embodiments, and the processing module 12 may be configured to perform a processing-related operation of the UE in the foregoing method embodiments.

In a possible implementation, the transceiver module 11 is configured to receive first indication information, where the first indication information indicates to activate integrity security protection and confidentiality security protection of a user plane. The processing module 12 is configured to: determine, based on the first indication information, to perform confidentiality and integrity security protection of the user plane by using an authenticated encryption algorithm, and configure the authenticated encryption algorithm of the user plane and a security key applicable to the authenticated encryption algorithm, where the security algorithm includes a part for confidentiality protection and a part for integrity protection, the security algorithm is used for confidentiality and integrity security protection of the user plane, and performing confidentiality and integrity security protection of the user plane includes: performing integrity protection on a user plane message by using the security key as an input key of the part for integrity protection in the security algorithm, and performing confidentiality protection on the user plane message by using the security key as an input key of the part for confidentiality protection in the security algorithm.

In another possible implementation, the processing module 12 is configured to determine an integrity security protection algorithm based on a selected security algorithm. The transceiver module 11 is configured to receive third indication information, where the third indication information indicates to activate integrity security protection of a user plane. The processing module 12 is configured to: when determining, based on the third indication information, to perform integrity security protection of the user plane by using the integrity security protection algorithm, configure the integrity security protection algorithm of the user plane and a security key applicable to the integrity security protection algorithm.

In still another possible implementation, the processing module 12 is configured to determine a confidentiality security protection algorithm based on a selected security algorithm. The transceiver module 11 is configured to receive third indication information, where the third indication information indicates to activate confidentiality security protection of a user plane. The processing module 12 is configured to: when determining, based on the third indication information, to perform confidentiality security protection of the user plane by using the confidentiality security protection algorithm, determine the confidentiality security protection algorithm based on the authenticated encryption algorithm, and configure the confidentiality security protection algorithm of the user plane and a security key applicable to the confidentiality security protection algorithm, where the authenticated encryption algorithm can implement both confidentiality security protection and integrity security protection.

When the apparatus 10 is configured to perform the method in FIG. 5, the transceiver module 11 may be configured to perform an information receiving and sending step in the method, for example, step S510, and the processing module 12 may be configured to perform a processing step in the method, for example, step S530.

When the apparatus 10 is configured to perform the method in FIG. 6, the transceiver module 11 may be configured to perform an information receiving and sending step in the method, for example, step S640, and the processing module 12 may be configured to perform processing steps in the method, for example, steps S650 and S660.

When the apparatus 10 is configured to perform the method in FIG. 7, the transceiver module 11 may be configured to perform information receiving and sending steps in the method, for example, steps S710 and S730, and the processing module 12 may be configured to perform a processing step in the method, for example, step S740.

It should be understood that a specific process in which the units perform the foregoing corresponding steps is described in detail in the foregoing method embodiments. For brevity, details are not described herein again.

In another design, the apparatus 10 may correspond to the RAN in the foregoing method embodiments, or a component (for example, a chip) of the RAN.

The apparatus 10 may implement corresponding steps or procedures performed by the RAN in the foregoing method embodiments. The transceiver module 11 may be configured to perform operations related to receiving and sending of the RAN in the foregoing method embodiments, and the processing module 12 may be configured to perform a processing-related operation of the RAN in the foregoing method embodiments.

In a possible implementation, the processing module 12 is configured to: when determining to perform confidentiality and integrity security protection of a user plane by using an authenticated encryption algorithm, configure the authenticated encryption algorithm of the user plane and a security key applicable to the authenticated encryption algorithm. The transceiver module 11 is configured to send first indication information to a terminal device, where the first indication information indicates to activate integrity security protection and confidentiality security protection of the user plane, where the security algorithm includes a part for confidentiality protection and a part for integrity protection, the security algorithm is used for confidentiality and integrity security protection of the user plane, and performing confidentiality and integrity security protection of the user plane includes: performing integrity protection on a user plane message by using the security key as an input key of the part for integrity protection in the security algorithm, and performing confidentiality protection on the user plane message by using the security key as an input key of the part for confidentiality protection in the security algorithm.

In another possible implementation, the processing module 12 is configured to determine an integrity security protection algorithm based on a selected security algorithm. The processing module 12 is configured to: when determining, based on a security protection policy, to activate integrity security protection of a user plane, configure the integrity security protection algorithm of the user plane and a security key applicable to the integrity security protection algorithm. The transceiver module 11 is configured to send third indication information to a terminal device, where the third indication information indicates to activate integrity security protection of the user plane.

In still another possible implementation, the processing module 12 is configured to determine a confidentiality security protection algorithm based on a selected security algorithm. The processing module 12 is configured to: when determining, based on a security protection policy, to activate confidentiality security protection of a user plane, configure the confidentiality security protection algorithm of the user plane and a security key applicable to the confidentiality security protection algorithm. The transceiver module 11 is configured to send third indication information to a terminal device, where the third indication information indicates to activate confidentiality security protection of the user plane.

When the apparatus 10 is configured to perform the method in FIG. 5, the transceiver module 11 may be configured to perform an information receiving and sending step in the method, for example, step S520, and the processing module 12 may be configured to perform a processing step in the method, for example, step S510.

When the apparatus 10 is configured to perform the method in FIG. 6, the transceiver module 11 may be configured to perform an information receiving and sending step in the method, for example, step S640, and the processing module 12 may be configured to perform processing steps in the method, for example, steps S610, S620, and S630.

When the apparatus 10 is configured to perform the method in FIG. 7, the transceiver module 11 may be configured to perform information receiving and sending steps in the method, for example, steps S710 and S730, and the processing module 12 may be configured to perform a processing step in the method, for example, step S720.

It should be understood that a specific process in which the units perform the foregoing corresponding steps is described in detail in the foregoing method embodiments. For brevity, details are not described herein again.

It should be further understood that the apparatus 10 herein is presented in a form of a functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a combined logic circuit, and/or another appropriate component that supports the described function. In an optional example, a person skilled in the art may understand that the apparatus 10 may be specifically a mobility management network element in the foregoing embodiments, and may be configured to perform procedures and/or steps corresponding to the mobility management network element in the foregoing method embodiments. Alternatively, the apparatus 10 may be specifically the terminal device in the foregoing embodiments, and may be configured to perform procedures and/or steps corresponding to the terminal device in the foregoing method embodiments. To avoid repetition, details are not described herein again.

The apparatus 10 in the foregoing solutions has a function of implementing corresponding steps performed by a device (for example, the terminal device or the network device) in the foregoing methods. The function may be implemented by hardware, or may be implemented by hardware executing corresponding software. The hardware or software includes one or more modules corresponding to the foregoing functions. For example, the transceiver module may be replaced with a transceiver (for example, a sending unit in the transceiver module may be replaced with a transmitter, and a receiving unit in the transceiver module may be replaced with a receiver), and another unit, for example, the processing module, may be replaced with a processor, to separately perform receiving and sending operations and a related processing operation in the method embodiments.

In addition, the transceiver module 11 may alternatively be a transceiver circuit (for example, may include a receiving circuit and a sending circuit), and the processing module may be a processing circuit.

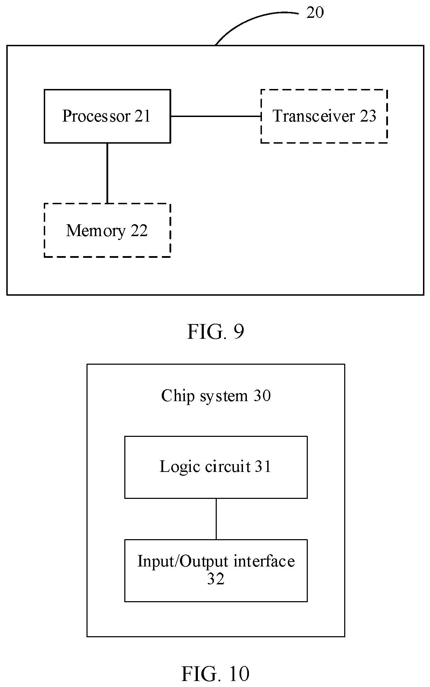

FIG. 9 is a diagram of another communication apparatus 20 according to an embodiment of this application. The apparatus 20 includes a processor 21. The processor 21 is configured to execute a computer program or instructions stored in a memory 22, or read data/signaling stored in a memory 22, to perform the methods in the foregoing method embodiments. Optionally, there are one or more processors 21.

Optionally, as shown in FIG. 9, the apparatus 20 further includes the memory 22, and the memory 22 is configured to store the computer program or the instructions and/or the data. The memory 22 and the processor 21 may be integrated together, or may be disposed separately. Optionally, there are one or more memories 22.

Optionally, as shown in FIG. 9, the apparatus 20 further includes a transceiver 23, and the transceiver 23 is configured to receive and/or send a signal. For example, the processor 21 is configured to control the transceiver 23 to receive and/or send a signal.

In a solution, the apparatus 20 is configured to implement operations performed by the UE in the foregoing method embodiments.

In another solution, the apparatus 20 is configured to implement operations performed by the RAN in the foregoing method embodiments.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor.

It should further be noted that the memory described herein is intended to include, but is not limited to, these and any other appropriate type of memory.

FIG. 10 is a diagram of a chip system 30 according to an embodiment of this application. The chip system 30 (which may also be referred to as a processing system) includes a logic circuit 31 and an input/output interface (input/output interface) 32.

The logic circuit 31 may be a processing circuit in the chip system 30. The logic circuit 31 may be coupled and connected to a storage unit, and invoke instructions in the storage unit, to cause the chip system 30 to implement the methods and functions in embodiments of this application. The input/output interface 32 may be an input/output circuit in the chip system 30, and outputs information processed by the chip system 30, or inputs to-be-processed data or signaling information to the chip system 30 for processing.

In a solution, the chip system 30 is configured to implement operations performed by the UE or the RAN in the foregoing method embodiments.

For example, the logic circuit 31 is configured to implement a processing-related operation performed by the UE or the RAN in the foregoing method embodiments, and the input/output interface 32 is configured to implement a sending and/or receiving-related operation performed by the UE or the RAN in the foregoing method embodiments.

An embodiment of this application further provides a computer-readable storage medium, storing computer instructions used to implement the method performed by the UE or the RAN in the foregoing method embodiments.

For example, when a computer program is executed by a computer, the computer is enabled to implement the method performed by the UE or the RAN in the foregoing method embodiments.

An embodiment of this application further provides a computer program product, including instructions. When the instructions are executed by a computer, the method performed by the UE or the RAN in the foregoing method embodiments is implemented.

An embodiment of this application further provides a communication system, including the UE and the RAN.

For explanations and beneficial effects of related content in any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement the foregoing embodiments, all or a part of the foregoing embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
when determining to perform confidentiality and integrity security protection of a user plane by using a security algorithm, configuring the security algorithm of the user plane and a security key applicable to the security algorithm; and
sending first indication information to a terminal device, wherein the first indication information indicates to activate confidentiality and integrity security protection of the user plane, wherein
the security algorithm comprises a part for confidentiality protection and a part for integrity protection, the security algorithm is used for confidentiality and integrity security protection of the user plane, and performing confidentiality and integrity security protection of the user plane comprises: performing integrity protection on a user plane message by using the security key as an input key of the part for integrity protection in the security algorithm, and performing confidentiality protection on the user plane message by using the security key as an input key of the part for confidentiality protection in the security algorithm.

2. The method according to claim 1, wherein the method further comprises:
determining, based on at least one of the following information, to perform confidentiality and integrity security protection of the user plane by using the security algorithm:
capability information of the terminal device, a security protection policy for a user plane message, an algorithm negotiation result, or an algorithm selection policy.

3. The method according to claim 1 or 2, wherein the method further comprises:
sending second indication information to the terminal device, wherein the second indication information indicates to perform confidentiality and integrity security protection of the user plane based on the security algorithm.

4. The method according to claim 3, wherein the method further comprises:
sending, to the terminal device, a data radio bearer DRB identifier, a session identifier, or a distributed unit DU identifier corresponding to the second indication information.

5. The method according to claim 3 or 4, wherein sending the second indication information to the terminal device comprises:
when determining to perform confidentiality and integrity security protection of the user plane by using the security algorithm, sending the second indication information to the terminal device.

6. The method according to any one of claims 1 to 5, wherein before sending the first indication information to the terminal device, the method further comprises:
selecting the security algorithm for confidentiality and integrity security protection of the user plane; and
sending an identifier of the security algorithm to the terminal device in an access stratum security mode command AS SMC procedure.

7. The method according to any one of claims 1 to 6, wherein sending the first indication information to the terminal device comprises:
sending a radio resource control RRC connection reconfiguration message to the terminal device, wherein the RRC connection reconfiguration message comprises the first indication information.

8. The method according to claim 7, wherein the RRC connection reconfiguration message further comprises the identifier of the security algorithm.

9. The method according to any one of claims 1 to 8, wherein the first indication information is status information of activating integrity security protection and activating confidentiality security protection, or the first indication information is the identifier of the security algorithm.

10. The method according to any one of claims 1 to 9, wherein configuring the security algorithm of the user plane and the security key applicable to the security algorithm comprises:
configuring, on a packet data convergence protocol PDCP entity, the security algorithm of the user plane and the security key applicable to the security algorithm.

11. The method according to any one of claims 1 to 10, wherein the method further comprises:
receiving an uplink user plane message from the terminal device, performing integrity verification on the uplink user plane message by using the security key as the input key of the part for integrity protection in the security algorithm, and decrypting the uplink user plane message by using the security key as the input key of the part for confidentiality protection in the security algorithm.

12. A communication method, comprising:
receiving first indication information, wherein the first indication information indicates to activate confidentiality and integrity security protection of a user plane; and
determining, based on the first indication information, to perform confidentiality and integrity security protection of the user plane by using a security algorithm, and configuring the security algorithm of the user plane and a security key applicable to the security algorithm, wherein
the security algorithm comprises a part for confidentiality protection and a part for integrity protection, the security algorithm is used for confidentiality and integrity security protection of the user plane, and performing confidentiality and integrity security protection of the user plane comprises: performing integrity protection on a user plane message by using the security key as an input key of the part for integrity protection in the security algorithm, and performing confidentiality protection on the user plane message by using the security key as an input key of the part for confidentiality protection in the security algorithm.

13. The method according to claim 12, wherein the method further comprises:
receiving second indication information, wherein the second indication information indicates to perform confidentiality and integrity security protection of the user plane based on the security algorithm.

14. The method according to claim 13, wherein the method further comprises:
receiving a data radio bearer DRB identifier, a session identifier, or a distributed unit DU identifier corresponding to the second indication information.

15. The method according to any one of claims 12 to 14, wherein before receiving the first indication information, the method further comprises:
receiving an identifier of the security algorithm in an access stratum security mode command AS SMC procedure.

16. The method according to any one of claims 12 to 15, wherein receiving the first indication information comprises:
receiving a radio resource control RRC connection reconfiguration message, wherein the RRC connection reconfiguration message comprises the first indication information.

17. The method according to claim 16, wherein the RRC connection reconfiguration message further comprises the identifier of the security algorithm.

18. The method according to any one of claims 12 to 17, wherein the first indication information is status information of activating integrity security protection and activating confidentiality security protection, or the first indication information is the identifier of the security algorithm.

19. The method according to any one of claims 12 to 18, wherein configuring the security algorithm of the user plane and the security key applicable to the security algorithm comprises:
configuring, on a packet data convergence protocol PDCP entity, the security algorithm of the user plane and the security key applicable to the security algorithm.

20. The method according to any one of claims 11 to 19, wherein the method further comprises:
receiving a downlink user plane message from a network end device, performing integrity verification on the downlink user plane message by using the security key as the input key of the part for integrity protection in the security algorithm, and decrypting the downlink user plane message by using the security key as the input key of the part for confidentiality protection in the security algorithm.

21. A communication method, comprising:
determining an integrity security protection algorithm based on a selected security algorithm;
when determining, based on a security protection policy, to activate integrity security protection of a user plane, configuring the integrity security protection algorithm of the user plane and a security key applicable to the integrity security protection algorithm; and
sending third indication information to a terminal device, wherein the third indication information indicates to activate integrity security protection of the user plane; or
determining a confidentiality security protection algorithm based on a selected security algorithm;
when determining, based on a security protection policy, to activate confidentiality security protection of a user plane, configuring the confidentiality security protection algorithm of the user plane and a security key applicable to the confidentiality security protection algorithm; and
sending third indication information to a terminal device, wherein the third indication information indicates to activate confidentiality security protection of the user plane, wherein
the security algorithm comprises a part for confidentiality protection and a part for integrity protection, the security algorithm is used for confidentiality and integrity security protection, and performing confidentiality and integrity security protection comprises: performing integrity protection by using the security key as an input key of the part for integrity protection in the security algorithm, and performing confidentiality protection by using the security key as an input key of the part for confidentiality protection in the security algorithm.

22. The method according to claim 21, wherein sending the third indication information to the terminal device comprises: sending a radio resource control RRC connection reconfiguration message to the terminal device, wherein the RRC connection reconfiguration message comprises the third indication information.

23. The method according to claim 22, wherein the RRC connection reconfiguration message further comprises an identifier of the security algorithm; or before sending the third indication information to the terminal device, the method further comprises: selecting the security algorithm for confidentiality and integrity security protection of the user plane; and sending an identifier of the security algorithm to the terminal device in an access stratum security mode command AS SMC procedure.

24. The method according to any one of claims 21 to 23, wherein the third indication information is status information of activating integrity security protection or activating confidentiality security protection.

25. A communication method, comprising:
determining an integrity security protection algorithm based on a selected security algorithm;
receiving third indication information, wherein the third indication information indicates to activate integrity security protection of a user plane; and
when determining, based on the third indication information, to perform integrity security protection of the user plane by using the integrity security protection algorithm, configuring the integrity security protection algorithm of the user plane and a security key applicable to the integrity security protection algorithm; or
determining a confidentiality security protection algorithm based on a selected security algorithm;
receiving third indication information, wherein the third indication information indicates to activate confidentiality security protection of a user plane; and
when determining, based on the third indication information, to perform confidentiality security protection of the user plane by using the confidentiality security protection algorithm, determining the confidentiality security protection algorithm based on the security algorithm, and configuring the confidentiality security protection algorithm of the user plane and a security key applicable to the confidentiality security protection algorithm, wherein
the security algorithm comprises a part for confidentiality protection and a part for integrity protection, the security algorithm is used for confidentiality and integrity security protection of the user plane, and performing confidentiality and integrity security protection comprises: performing integrity protection by using the security key as an input key of the part for integrity protection in the security algorithm, and performing confidentiality protection by using the security key as an input key of the part for confidentiality protection in the security algorithm.

26. The method according to claim 25, wherein receiving the third indication information comprises: receiving a radio resource control RRC connection reconfiguration message, wherein the RRC connection reconfiguration message comprises the third indication information.

27. The method according to claim 26, wherein the RRC connection reconfiguration message further comprises an identifier of the security algorithm; or before sending the third indication information to the terminal device, the method further comprises:
receiving an identifier of the security algorithm from the access network device in an access stratum security mode command AS SMC procedure.

28. The method according to claim 26 or 27, wherein the RRC connection reconfiguration message further comprises the identifier of the security algorithm.

29. The method according to any one of claims 25 to 28, wherein the third indication information is status information of activating integrity security protection or activating confidentiality security protection.

30. A communication system, comprising an access network device, wherein the access network device is configured to perform the method according to any one of claims 1 to 11, or the access network device is configured to perform the method according to any one of claims 21 to 24.

31. The communication system according to claim 30, wherein the communication system further comprises a terminal device, and the terminal device is configured to perform the method according to any one of claims 12 to 20, or the terminal device is configured to perform the method according to any one of claims 25 to 29.

32. A communication apparatus, comprising one or more functional modules configured to perform the method according to any one of claims 1 to 11, or one or more functional modules configured to perform the method according to any one of claims 12 to 20, or one or more functional modules configured to perform the method according to any one of claims 21 to 24, or one or more functional modules configured to perform the method according to any one of claims 25 to 29.

33. A communication apparatus, comprising:
a processor, configured to execute a computer program stored in a memory, to enable the apparatus to perform the method according to any one of claims 1 to 11, or to enable the apparatus to perform the method according to any one of claims 12 to 20, or to enable the apparatus to perform the method according to any one of claims 21 to 24, or to enable the apparatus to perform the method according to any one of claims 25 to 29.

34. A computer program product, wherein the computer program product comprises instructions for performing the method according to any one of claims 1 to 29.

35. A computer-readable storage medium, wherein the computer-readable storage medium stores a computer program, and when the computer program is run on a computer, the computer is enabled to perform the method according to any one of claims 1 to 29.

36. A chip, wherein the chip is installed on a communication apparatus, the chip comprises a processor and a communication interface, and when the processor reads instructions through the communication interface and runs the instructions, the communication apparatus is enabled to perform the method according to any one of claims 1 to 29.
